# EUROPÄISCHE PATENTSCHRIFT

(11) **EP 3 880 634 B1**
(45) Veröffentlichungstag und Bekanntmachung des Hinweises auf die Patenterteilung: **09.11.2022**
(21) Anmeldenummer: 19812921.5
(22) Anmeldetag: 11.11.2019
(51) Int. Cl.: C05C 7/00

(54) **VERFAHREN ZUR REDUZIERUNG DER GASEMISSION AUS WIRTSCHAFTSDÜNGERN**
METHOD OF REDUCING GAS EMISSION FROM FARM FERTILIZERS
PROCÉDÉ DE RÉDUCTION DES ÉMISSIONS DE GAZ ISSUES D'ENGRAIS ORGANIQUES

(30) Priorität: 12.11.2018 DE 102018128173
(43) Veröffentlichungstag der Anmeldung: 22.09.2021
(73) Patentinhaber: Alzchem Trostberg GmbH, 83308 Trostberg (DE)
(72) Erfinder: WINKLER, Stephan, 83352 Altenmarkt (DE); EBERL, Martin, 84494 Niederbergkirchen (DE); ERL, Susanne, 83342 Tacherting (DE); SANS, Jürgen, 83308 Trostberg (DE); BEZLER, Jürgen, 84489 Burghausen (DE)
(74) Vertreter: Dey, Michael
(86) Internationale Anmeldenummer: PCT/EP2019/080869
(87) Internationale Veröffentlichungsnummer: WO 2020/099321

(56) Entgegenhaltungen:
- US-A1- 2004 016 275
- DATABASE EMBASE [Online] ELSEVIER SCIENCE PUBLISHERS, AMSTERDAM, NL; 1. Januar 2018 (2018-01-01), SAJEEV E P M: "Greenhouse gas and ammonia emissions from different stages of liquid manure management chains: Abatement options and emission interactions", XP002797649, Database accession no. EMB-620213744 -& MOHANKUMAR SAJEEV EP, WINIWARTER W, AMON B.: JOURNAL OF ENVIRONMENTAL QUALITY, Bd. 47, Nr. 1, 1. Januar 2018 (2018-01-01) , Seiten 30-41, XP055674038, ISSN: 0047-2425, DOI: 10.2134/jeq2017.05.0199
- DATABASE EMBASE [Online] ELSEVIER SCIENCE PUBLISHERS, AMSTERDAM, NL; 1 January 2018 (2018-01-01), SAJEEV E P M: "Greenhouse gas and ammonia emissions from different stages of liquid manure management chains: Abatement options and emission interactions", Database accession no. EMB-620213744 & SAJEEV E P M: "Greenhouse gas and ammonia emissions from different stages of liquid manure management chains: Abatement options and emission interactions", JOURNAL OF ENVIRONMENTAL QUALITY 20180101 ASA/CSSA/SSSA USA, vol. 47, no. 1, 1 January 2018 (2018-01-01), pages 30-41, ISSN: 0047-2425

## Beschreibung

Die vorliegende Erfindung betrifft ein Verfahren zur Reduzierung der Emission von umweltschädlichen Klimagasen Methan und Kohlenstoffdioxid aus Wirtschaftsdüngern während ihrer Lagerung. Des Weiteren betrifft die vorliegende Erfindung die Verwendung einer Zusammensetzung, die die Emission von umweltschädlichen Klimagasen Methan und Kohlenstoffdioxid aus Wirtschaftsdüngern während ihrer Lagerung unterdrückt bzw. vermindert.

Wirtschaftsdünger gelten in der Bundesrepublik Deutschland als Düngemittel, die düngemittelrechtlichen Vorgaben und Normen unterliegen. Insbesondere ist bei der Verwendung und Anwendung als auch beim Inverkehrbringen von Wirtschaftsdüngern das Düngegesetz, die Düngeverordnung und die Düngemittelverordnung wie auch EU-Richtlinien in ihren jeweilig aktuellen Fassungen einzuhalten.

So ist beispielsweise mit der geltenden Düngeverordnung die Ausbringmenge und Ausbringzeit von Wirtschaftsdüngern geregelt. Demnach dürfen Wirtschaftsdünger innerhalb von Sperrfristen, welche abhängig von der Bodenart und der Frucht mehrere Monate im Jahr betreffen, nicht auf landwirtschaftliche Nutzflächen ausgebracht werden. Aufgrund dessen sind nutztierhaltende landwirtschaftliche Betriebe angehalten, ausreichende Lagerräume für Gülle, Jauche, Flüssigmist, Stallmist und Ähnliches vorzuhalten. Gemäß der aktuellen Gesetzeslage ist eine Lagerung von Wirtschaftsdüngern für mindestens 150 Tage durchaus erforderlich.

US 2004/0016275 A1 beschreibt die Verwendung von Calciumcyanamidzusammensetzungen, um den Austritt von unangenehmen Gerüchen aus Gülle zu reduzieren.

E. Sajeev et al., Journal of Environmental Quality, 47:30-41 (2018) beschreiben Gas- und Ammoniakemissionen in verschiedenen Stufen der Gülleverarbeitung.

US 2002/0121117 A1 sowie US 2014/0311200 A1 beschreiben die Verwendung von Calciumcyanamidzusammensetzungen um den Austritt von unangenehmen Gerüchen aus Gülle zu reduzieren. Solche unangenehmen Gerüche werden beispielsweise durch schwefelhaltige Verbindungen oder durch Ammoniak hervorgerufen.

Gülle, Jauche, Flüssigmist, Stallmist und Ähnliches haben seit jeher als Wirtschaftsdünger eine große Bedeutung für die Landwirtschaft. Aufgrund der Konzentration der landwirtschaftlichen Tierhaltung auf einen begrenzten Raum, insbesondere bei der Stallhaltung, fallen diese Wirtschaftsdünger jedoch vermehrt und in konzentrierter Form an. Mit der Lagerung dieser Wirtschaftsdünger ist auch eine Vielzahl an ungelösten Problemen verbunden. Beispielsweise entstehen während der Lagerung der Wirtschaftsdünger aufgrund aerober und anaerober Gärprozesse sowie mikrobiellen Abbau der organischen Substanzen in den Wirtschaftsdüngern umweltschädliche Klimagase, wie Methan (CH₄) oder Kohlenstoffdioxid (CO₂).

So entstammten beispielsweise 2016 rund 59 % der gesamten Methan-Emissionen in Deutschland aus der Landwirtschaft. In diesem Jahr machte das Wirtschaftsdüngermanagement (Lagern und Ausbringen von Gülle und Festmist) 19,2 % der gesamten Methan-Emissionen aus der deutschen Landwirtschaft aus. Der größte Anteil des Methans aus Wirtschaftsdünger geht auf die Exkremente von Rindern - und in geringerem Maße von Schweinen - zurück. Die anderen Tiergruppen (zum Beispiel Geflügel, Esel, Pferde) sind dagegen vernachlässigbar (https://www.umweltbundesamt.de/daten/land-forstwirtschaft/beitrag-der-landwirtschaft-zu-den-treibhausgas#textpart-1).

Ein analoges Verhalten hinsichtlich der Emission von klimaschädlichen Gasen kann bei der Lagerung von Gärresten, die Biogaserzeugungsanlagen entnommen werden, beobachtet werden. Auch diese Gärreste, die ebenfalls als Wirtschaftsdünger verwendet werden, emittieren bei der offenen Lagerung klimaschädliche Gase.

In der Vergangenheit hat es nicht an Versuchen gemangelt, diesen Problemen Herr zu werden. So sind bereits eine Reihe von Lösungen aufgefunden worden, die eine Reduktion der Emission von klimaschädlichen Gasen aus Wirtschaftsdüngern ermöglichen. Die Möglichkeiten zur Senkung der Emissionen sind vielfältig und werden in unterschiedlichen Bereichen der landwirtschaftlichen Produktion wirksam. Ohne Anspruch auf Vollständigkeit können hier folgende Maßnahmen genannt werden:
▪ Maßnahmen im Stall, beispielsweise Abluftreinigung, emissionsarme Offenställe, Hygieneverbesserung.
▪ Abdeckung der Gülle in den Behältern mit Strohhäcksel, Granulaten oder Schwimmfolien.
▪ Einsatz von emissionsarmen Techniken bei der Ausbringung von Wirtschaftsdünger, beispielsweise unmittelbare Einarbeitung von Wirtschaftsdünger in den Boden.
▪ Separation der Wirtschaftsdünger in feste und flüssige Phasen zur Verbesserung der Transportmöglichkeit.
▪ Moderne und angepasste Fütterungsstrategien durch proteinarme Mehrphasenfütterung.

Die Emission von schädlichen Gasen während der Lagerung von Wirtschaftsdüngern in die Umwelt kann erfolgreich durch geschlossene Lagerbehälter, Auffangen der entstandenen Gase und Weiterverarbeitung oder Entsorgung der Gase ermöglicht werden. Der apparative Aufwand hierfür ist jedoch mit erheblichen Kosten verbunden.

Der vorliegenden Erfindung liegt daher die Aufgabe zugrunde, ein Verfahren zur Reduzierung der Gasemission von Methan und/oder Kohlenstoffdioxid aus Wirtschaftsdüngern während deren Lagerung bereitzustellen, das wirtschaftlich einsetzbar ist und zudem den geplanten Einsatz des Wirtschaftsdüngers als Düngemittel für die Landwirtschaft nicht beeinträchtigt.

Gelöst wird diese Aufgabe durch ein Verfahren gemäß Anspruch 1 sowie Verwendungen gemäß Anspruch 9 und 10. Bevorzugte Ausführungsformen der Erfindung sind in den Unteransprüchen angegeben.

Somit ist gemäß einer ersten Ausführung ein Verfahren zur Reduzierung der Emission von Methan (CH₄) und/oder Kohlenstoffdioxid (CO₂) aus Wirtschaftsdünger während dessen Lagerung Gegenstand der vorliegenden Erfindung, das die folgenden Verfahrensschritte umfasst:
a) Bereitstellen eines Lagertanks für den Wirtschaftsdünger mit einem Volumen X, und
b) Befüllen des Lagertanks mit dem Wirtschaftsdünger in einer Menge, die mindestens 5 Vol.-% des Volumens X des Lagertanks entspricht, und
c) Zugeben einer Zusammensetzung umfassend Calciumcyanamid (CaNCN) in den Lagertank und Inkontaktbringen der Zusammensetzung mit dem Wirtschaftsdünger.

Wesentlich ist hierbei, dass Calciumcyanamid und nicht Cyanamid eingesetzt wird. Calciumcyanamid (CaNCN, CAS [156-62-7]), das Calciumsalz des Cyanamids (CH₂N₂, CAS [420-04-2]) ist seit geraumer Zeit als Bestandteil und Wirkstoff von Düngemitteln bekannt. So ist sowohl in technischem Kalkstickstoff als auch in nitrathaltigem Kalkstickstoff, die als Düngemittel in Europa zugelassen sind, Calciumcyanamid als essentieller Hauptbestandteil enthalten. Diese Düngemittel werden als Bodendünger in einer Vielzahl an Kulturen wie beispielsweise Mais, Kartoffel und Reis eingesetzt.

Gemäß der vorliegenden Erfindung bedeutet Wirtschaftsdünger ein Düngemittel gemäß § 2 Abs. (1), (2), (3), (4) und (5) Düngegesetz (DüngG, vom 9. Januar 2009 (BGBI. I S. 54, 136), zuletzt durch Artikel 1 des Gesetzes vom 5. Mai 2017 (BGBI. I S. 1068) geändert). Somit sind Wirtschaftsdünger gemäß der vorliegenden Erfindung Düngemittel, die
a) als tierische Ausscheidungen
   aa) bei der Haltung von Tieren zur Erzeugung von Lebensmitteln oder
   bb) bei der sonstigen Haltung von Tieren in der Landwirtschaft oder
b) als pflanzliche Stoffe im Rahmen der pflanzlichen Erzeugung oder in der Landwirtschaft,
   auch in Mischungen untereinander oder nach aerober oder anaerober Behandlung, anfallen oder erzeugt werden.

Unter den Begriff Wirtschaftsdünger fällt somit insbesondere auch

| | |
|---|---|
| - Festmist: | Wirtschaftsdünger aus tierischen Ausscheidungen, auch mit Einstreu, insbesondere Stroh, Sägemehl, Torf oder anderes pflanzliches Material, das im Rahmen der Tierhaltung zugefügt worden ist, oder mit Futterresten vermischt, dessen Trockensubstanzgehalt 15 vom Hundert übersteigt; |
| - Gülle: | Wirtschaftsdünger aus allen tierischen Ausscheidungen, auch mit geringen Mengen Einstreu oder Futterresten oder Zugabe von Wasser, dessen Trockensubstanzgehalt 15 vom Hundert nicht übersteigt; |
| - Jauche: | Wirtschaftsdünger aus tierischen Ausscheidungen, bei dem es sich um ein Gemisch aus Harn und ausgeschwemmten feinen Bestandteilen des Kotes oder der Einstreu sowie von Wasser handelt; Jauche kann in geringem Umfang Futterreste sowie Reinigungs- und Niederschlagswasser enthalten; |
| - Biogasgärreste: | Wirtschaftsdünger aus Rückständen, die der Vergärung von organischen Materialien sowohl pflanzlicher als auch tierischer Herkunft aus Biogasanlagen entstammen. |

Das erfindungsgemäße Verfahren ist besonders gut geeignet zur Reduzierung der Emission von Methan und/oder Kohlenstoffdioxid aus flüssigen Wirtschaftsdüngern und insbesondere aus Gülle, Jauche und/oder Biogärresten.

Überraschender Weise hat sich gezeigt, dass eine Zusammensetzung umfassend Calciumcyanamid die Emission klimaschädlichen Methan (CH₄) und Kohlenstoffdioxid (CO₂) aus Wirtschaftsdüngern während deren Lagerung in sehr effektiver und sehr effizienter Art und Weise reduzieren kann. So konnte gezeigt werden (vgl. Beispiele), dass bereits eine Menge von 1,38 kg einer Zusammensetzung umfassend Calciumcyanamid pro 1 m³ Wirtschaftsdünger bereits 24 Std. nach der Zugabe der Zusammensetzung eine Emission von Methan und Kohlenstoffdioxid signifikant reduzieren kann.

Somit ist auch die Verwendung einer Zusammensetzung umfassend Calciumcyanamid zur Reduzierung der Emission von Methan und/oder Kohlenstoffdioxid, aus Wirtschaftsdünger während dessen Lagerung in einem Lagertank Gegenstand der vorliegenden Erfindung.

Bei Methan und Kohlenstoffdioxid handelt es sich um geruchlose Gase. Aus Umweltgründen ist es gewünscht die Emission dieser Gase zu reduzieren oder gänzlich zu vermeiden.

Calciumcyanamid-haltige Zusammensetzungen werden seit geraumer Zeit als Düngemittel eingesetzt. Der Einsatz dieser Düngemittel erfolgte jedoch losgelöst von dem Einsatz eines Wirtschaftsdüngers, da die Ausbringung von Wirtschaftsdünger an gesetzlich vorgeschriebene Zeiten gebunden ist und diese Zeiten verschieden von den empfohlenen Ausbringzeiten Calciumcyanamid-haltiger Zusammensetzungen ist. Somit konnte eine Reduktion der Emission von klimaschädlichen Gasen bis heute nicht beobachtet werden.

Mit Ausführung der der Erfindung zugrundeliegenden Untersuchungen konnte zudem gezeigt werden, dass während der Lagerung des mit einer mit Calciumcyanamid-haltigen Zusammensetzung behandelten Wirtschaftsdüngers keine Rückstände erzeugt werden, die als nachteilig für die Verwendung desselben als Düngemittel einzuschätzen ist. Somit kann ein gemäß der vorliegenden Erfindung behandelter Wirtschaftsdünger auch ohne weiteres als Düngemittel eingesetzt werden.

Von besonderer Bedeutung ist, dass ein somit behandelter Wirtschaftsdünger zudem keine wesentlichen Änderungen hinsichtlich seines Stickstoffgehaltes erfährt. Durch einen Vergleich der eingesetzten Mengen in den Anwendungen wird diese Tatsache besonders deutlich. So wird beispielsweise ein in der EU zugelassener Calciumcyanamid-haltiger Dünger, nämlich nitrathaltiger Kalkstickstoff, in einer Menge von üblicherweise 400 kg pro Hektar (ha) ausgebracht. Bei dieser Applikation wird auf den Grün- oder Ackerboden eine gesamt-Stickstoffmenge von 79,2 kg pro ha ausgebracht.

Für Wirtschaftsdünger ist eine Ausbringungsmenge von bis zu 30 m³ pro ha Grün- oder Ackerboden als Standardanwendung anzusehen. Der durchschnittliche Anteil an gesamt-Stickstoff in Rindergülle beträgt etwa 0,40% (vgl. auch Beispiel 1), die bei einer Ausbringungsmenge von 30 m³ pro ha 120 kg gesamt-Stickstoff pro ha ergibt. Wird dem Wirtschaftsdünger gemäß vorliegender Erfindung 2,93 kg einer Zusammensetzung umfassend Calciumcyanamid pro m³ Wirtschaftsdünger zugegeben (vgl. Beispiel 1), so erhöht sich der Anteil an gesamt-Stickstoff im behandelten Wirtschaftsdünger auf lediglich 0,46 %. Somit beträgt die bei der beschriebenen Ausbringung des Wirtschaftsdüngers zugegebene gesamt-Stickstoffmenge nur 18 kg pro ha Grün- oder Ackerboden mehr. Somit kann die Gesamtmenge an Wirtschaftsdünger pro ha im Wesentlichen gleich bleiben. Hierdurch können Wirtschaftsdünger und üblich eingesetzte Stickstoffdünger, die ein von Wirtschaftsdünger verschiedenes Wirkprofil besitzen, über das Jahr betrachtet in unveränderter Menge eingesetzt werden, ohne dass eine Überdüngung befürchtet werden muss. Somit grenzt sich die Anwendung einer Calciumcyanamid-haltigen Zusammensetzung, die gemäß der vorliegenden Erfindung in einen Wirtschaftsdünger eingearbeitet wurde, hinsichtlich des ausgebrachten gesamt-Stickstoffs auch deutlich von einer üblichen Düngung mit Calciumcyanamid-haltigen Dünger ab.

Das erfindungsgemäße Verfahren zeichnet sich dadurch aus, dass allein durch die Zugabe einer Zusammensetzung umfassend Calciumcyanamid in den Lagertank und dem Inkontaktbringen der Zusammensetzung mit dem Wirtschaftsdünger eine Gasentwicklung aus dem Wirtschaftsdünger reduziert wird. So ist gemäß der vorliegenden Erfindung vorgesehen, dass die Verfahrensschritte b) und c) unabhängig von einer etwaigen Reihenfolge erfolgen können. So kann eine Zugabe der Zusammensetzung gemäß Verfahrensschritt c) vor, während oder nach der ersten Befüllung des Lagertanks mit dem Wirtschaftsdünger erfolgen. Sollte die Zugabe vor der ersten Befüllung erfolgen, so sollte das Zugeben in einem angemessenen Zeitraum vor dem Inkontaktbringen mit dem Wirtschaftsdünger erfolgen. Als angemessen ist hierbei ein Zeitraum von weniger als einem Tag zu verstehen.

Die Zugabe der Zusammensetzung gemäß Verfahrensschritt c) kann in einen vollständig leeren Lagertank oder einen nicht vollständig entleerten, nämlich mit Restinhalt befüllten Lagertank, erfolgen. Wesentlich ist, dass der Lagertank mit mindestens 5 Vol.-% seines Fassungsvermögens mit Wirtschaftsdünger befüllt ist oder befüllt wird. Somit kann eine für die Wirkung der Zusammensetzung ausreichende Durchmischung der Zusammensetzung mit dem Wirtschaftsdünger gewährleistet werden.

Als vorteilhaft ist anzusehen, wenn während oder nach der Zugabe der Calciumcyanamid-haltigen Zusammensetzung zum Wirtschaftsdünger in den Lagertank die Calciumcyanamid-haltige Zusammensetzung und der Wirtschaftsdünger vermischt werden, insbesondere indem der Inhalt des Lagertanks mit einem Propellermixer oder mit einer Rührpumpe umgewälzt wird. Dabei wird die Calciumcyanamid-haltige Zusammensetzung in den Lagertank mit mindestens 5 Vol.-% Inhalt Wirtschaftsdünger gegeben und eingerührt. Anschließend kann eine weitere Zugabe des Wirtschaftsdüngers erfolgen. Nach Beendigung dieser Zugabe wird der Wirtschaftsdünger im Lagertank nochmals umgewälzt. Der Lagertank kann hierbei teilbefüllt oder komplett befüllt werden.

Für die Umwälzung des Wirtschaftsdüngers im Lagertank eignen sich Propellermixer, welche mit einem Traktor oder mit einem Elektromotor angetrieben werden. Als besonders geeignet erwiesen sich fest in der Lagertankwand eingebaute Propellerrührer oder Einbaumixer jeweils mit Tauchmotor, weiterhin am Traktor angebrachte Einschwenk-, Gelenk- und Turmpropellermixer, welche in den Lagertank mit Wirtschaftsdünger eingetaucht werden. Weiterhin eignen sich für die Umwälzung des Wirtschaftsdüngers im Lagertank an Förderpumpen angebrachte Rührdüsen, insbesondere mit einem Elektromotor oder Traktor angetriebene Langwellenrührpumpen mit Rührdüse oder Kreiselpumpen mit Reißwerk.

Gemäß einer bevorzugten Ausführung des Verfahrens kann die Zugabe der Zusammensetzung gemäß Verfahrensschritt c) einmalig oder portionsweise erfolgen. Besonders bevorzugt kann die Zugabe der Zusammensetzung
i) einmalig nach oder während der ersten Zugabe einer ersten Teilmenge an Wirtschaftsdünger in den Lagertank erfolgen, oder
ii) portionsweise nach jeder Teilbefüllung des Lagertanks erfolgen, oder
iii) einmalig nach oder während der vollständigen Befüllung des Lagertanks mit Wirtschaftsdünger erfolgen.

So besteht die Möglichkeit, die Zugabe der Zusammensetzung umfassend Calciumcyanamid während oder nach einer Teil- oder Komplettfüllung des Lagertanks durchzuführen. Auch hier hat sich als vorteilhaft erwiesen, wenn während und nach der Zugabe der Zusammensetzung umfassend Calciumcyanamid der Inhalt des Lagertanks umgewälzt wird, insbesondere mit einem Propellermixer oder mit einer Rührpumpe.

Oftmals besteht die Gegebenheit, dass durch Viehhaltung kontinuierlich Wirtschaftsdünger anfällt und in einem mit mindestens 5 Vol.-% befüllten Lagertank gesammelt wird. Auch hier besteht die Möglichkeit, die Zusammensetzung umfassend Calciumcyanamid vor, während oder nach der kontinuierlichen Befüllung mit Wirtschaftsdünger zuzugeben. Ebenso hat sich hier als vorteilhaft erwiesen, wenn während und nach der Zugabe der Zusammensetzung umfassend Calciumcyanamid der Wirtschaftsdünger im Lagertank umgewälzt wird.

Ebenso ist als vorteilhaft anzusehen, wenn die Zugabe der Zusammensetzung umfassend Calciumcyanamid in Portionen vor, während und nach einer kontinuierlichen oder portionsweisen Befüllung des Lagertanks mit Wirtschaftsdünger erfolgt. Wiederum hat sich hier als vorteilhaft erwiesen, wenn während und nach der Zugabe der Zusammensetzung umfassend Calciumcyanamid der Wirtschaftsdünger im Lagertank umgewälzt wird.

Die Zugabe der Zusammensetzung umfassend Calciumcyanamid erfolgt in offenen und in geschlossenen Lagertanks mit Wirtschaftsdünger. Als geschlossene Lagertanks sind Tanks oder Behälter mit Zeltdach oder Betondecke zu verstehen. Offene Lagertanks oder Lagerbehälter besitzen keine baulichen Abdeckungen.

Hervorzuheben ist an dieser Stelle, dass das erfindungsgemäße Verfahren in nicht begrenzter Auswahl an Lagertanks durchgeführt werden kann. Die Größe des Lagertanks ist nicht entscheidend. So kann das Volumen X jede vernünftige Größe annehmen. Insbesondere bedeutet X ein Volumen gemessen in [m³], das insbesondere zwischen [0,001 m³**≤ X ≤ 20.000** m³], vorzugsweise zwischen 0,1 **m³≤ X ≤ 10.000 m³ und mehr bevorzugt zwischen 1 m³ ≤ X ≤** 10.000 m³ und besonders bevorzugt zwischen 10 **m³ ≤ X ≤** 10.000 m³ liegt.

Weiterhin zeichnet sich das Verfahren dadurch aus, dass die Zugabe der Zusammensetzung umfassend Calciumcyanamid in einen Lagertank mit Wirtschaftsdünger erfolgt, wobei die Temperatur des Wirtschaftsdüngers im Lagertank einen Bereich von 0 °C bis 60 °C aufweist. Das Verfahren ist sowohl bei winterlichen und hochsommerlichen Gegebenheiten als auch bei Wirtschaftsdüngern anzuwenden, welche unmittelbar aus einen Fermentationsprozess stammen oder sich in einem Nachgärbehälter oder -tank nach einem Biogasprozess befinden.

Gemäß der vorliegenden Erfindung wird eine Zusammensetzung umfassend Calciumcyanamid in einem Verfahren zur Reduzierung der Emission von Methan und/oder Kohlenstoffdioxid aus Wirtschaftsdünger während dessen Lagerung zum Einsatz gebracht.

Die Einwirkzeit der Zusammensetzung umfassend Calciumcyanamid auf den Wirtschaftsdünger zur Reduzierung der Emission von Methan und/oder Kohlenstoffdioxid beträgt erfindungsgemäß vorzugsweise mindestens 24 Stunden, mehr bevorzugt > 30 Tage, noch mehr bevorzugt > 40 Tage und insbesondere > 50 Tage. Die Lagerzeit kann aber auch deutlich länger sein und beispielsweise bis zu 150 Tage oder, falls gewünscht, auch > 150 Tage betragen.

Erfindungsgemäß können durch die Zugabe einer Zusammensetzung umfassend Calciumcyanamid insbesondere mindestens 30 %, weiter bevorzugt mindestens 40 %, weiter bevorzugt mindestens 50 %, weiter bevorzugt mindestens 60 %, noch weiter bevorzugt mindestens 70 % und besonders bevorzugt mindestens 80 % der Methan- und/oder Kohlendioxidemission aus Wirtschaftsdüngern reduziert werden (in Vergleich zu unbehandelten Wirtschaftsdünger).

Somit ist auch die Verwendung einer Zusammensetzung umfassend Calciumcyanamid zur Reduzierung der Emission von Methan und/oder Kohlenstoffdioxid aus Wirtschaftsdünger während dessen Lagerung in einem Lagertank Gegenstand der vorliegenden Erfindung.

Weiterhin hat sich in Untersuchungen gezeigt, dass eine Zugabe der Calciumcyanamid-haltigen Zusammensetzung zu jedem Zeitpunkt der Lagerung erfolgen kann (vgl. Beispiele). So hat sich gezeigt, dass auch eine Zugabe nach mehreren Wochen Lagerung des Wirtschaftsdüngers eine Reduzierung der Emission von Methan und Kohlenstoffdioxid ermöglicht. Somit ist auch die Verwendung einer Zusammensetzung umfassend Calciumcyanamid als Gärstopper oder Gärinhibitor einer anaeroben Gärung von Wirtschaftsdünger und/ oder als Inhibitor eines mikrobiellen Abbaus von organischen Substraten in Wirtschaftsdünger während dessen Lagerung in einem Lagertank Gegenstand der vorliegenden Erfindung.

Bevorzugt kann in der erfindungsgemäßen Verwendung oder dem erfindungsgemäßen Verfahren eine Zusammensetzung eingesetzt werden, die 10 bis 100 Gew.-% Calciumcyanamid (Gew.-% bezogen auf die Zusammensetzung) umfasst. Besonders bevorzugt ist hierbei eine Zusammensetzung, die mindestens 20 Gew.-%, weiter bevorzugt mindestens 25 Gew.-%, weiter bevorzugt mindestens 30 Gew.-%, weiter bevorzugt mindestens 35 Gew.-%, weiter bevorzugt mindestens 40 Gew.-%, weiter bevorzugt mindestens 45 Gew.-%, weiter bevorzugt mindestens 50 Gew.-%, weiter bevorzugt mindestens 60 Gew.-%, und bis zu 100 Gew.-%, insbesondere bis zu 95 Gew.-%, insbesondere bis zu 80 Gew.-%, insbesondere bis zu 55 Gew.-%, Calciumcyanamid (bezogen auf die Zusammensetzung) umfasst.

Angaben in Gew.-% sind im Zusammenhang der vorliegenden Erfindung als Gewichtsangaben eines Inhaltsstoffes oder einer Gruppe von Inhaltsstoffen bezogen auf eine Zusammensetzung zu verstehen, deren Inhaltsstoffe sich auf 100 Gew.-% ergänzen.

Gemäß einer weiteren Ausführung der Erfindung kann das Calciumcyanamid auf ein Trägermaterial aufgebracht sein. Dieses Trägermaterial kann ein für landwirtschaftliche Zwecke inertes Material, ein für landwirtschaftliche Zwecke zugelassener Hilfsstoff oder ein Düngemittel sein. Als Trägermaterial werden gemäß der vorliegenden Erfindung besonders bevorzugt Calciumcarbonat und/oder verwandte Stoffe oder Mineraldünger eingesetzt. Diese Trägermaterialien können aus großtechnischen Prozessen entstammen und einen Anteil an freiem Kohlenstoff, Kohle oder Graphit enthalten. Gleichzeitig oder unabhängig hiervon kann auch vorgesehen sein, dass das Calciumcyanamid vermischt mit weiteren Inhaltsstoffen eingesetzt wird.

Besonders bevorzugt kann in der erfindungsgemäßen Verwendung oder dem erfindungsgemäßen Verfahren somit eine Zusammensetzung eingesetzt werden, die
a) Calciumcyanamid,
b) mindestens eine Verbindung aus der Gruppe der Carbonate, Oxide und Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, und
c) weiter bevorzugt gegebenenfalls freien Kohlenstoff, Kohle oder Graphit, umfasst.

Die Anteile der weiteren Inhaltsstoffe bzw. Trägermaterialien können variieren. Bevorzugt kann die Zusammensetzung mindestens eine Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, umfassen, wobei die Menge der mindestens einen Verbindung aus der Gruppe der Carbonate, Oxide und Hydroxide, oder Mischungen hiervon mindestens 5 Gew.-%, bevorzugt mindestens 10 Gew.-%, weiter bevorzugt mindestens 15 Gew.-%, weiter bevorzugt mindestens 20 Gew.-%, und gleichzeitig höchstens 50 Gew.-%, insbesondere höchstens 40 Gew.-%, insbesondere höchstens 35 Gew.-%, insbesondere höchstens 25 Gew.-% (Gew.-% bezogen auf die Zusammensetzung) beträgt.

Der Anteil an freiem Kohlenstoff, Kohle oder Graphit in der Zusammensetzung kann bis zu 15 Gew.-% (bezogen auf die Zusammensetzung) betragen.

Weiterhin kann die Zusammensetzung herstellungsbedingt bis zu 10 Gew.-% Wasser (bezogen auf die Zusammensetzung) enthalten.

Besonders bevorzugt kann in der erfindungsgemäßen Verwendung oder Verfahren somit eine Zusammensetzung eingesetzt werden, die

| | | |
|---|---|---|
| a) | 25 bis 95 Gew.-% | Calciumcyanamid, |
| b) | 5 bis 40 Gew.-% | mindestens eine Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, |

umfasst (bezogen auf die Zusammensetzung).

Weiter bevorzugt kann in der erfindungsgemäßen Verwendung oder Verfahren somit eine Zusammensetzung eingesetzt werden, die

| | | |
|---|---|---|
| a) | 25 bis 95 Gew.-% | Calciumcyanamid, |
| b) | 5 bis 40 Gew.-% | mindestens eine Verbindung aus der Gruppe der Carbonate, Oxide und Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, |
| c) | bis zu 15 Gew.-% | freier Kohlenstoff, Kohle oder Graphit, und |
| d) | bis zu 10 Gew.-% | Wasser, |

umfasst (bezogen auf die Zusammensetzung).

Gemäß einer weiter bevorzugten Ausführung der erfindungsgemäßen Verwendung oder des erfindungsgemäßen Verfahren kann eine Zusammensetzung eingesetzt werden, die

| | | |
|---|---|---|
| a) | 60 bis 95 Gew.-% | Calciumcyanamid, |
| b) | 5 bis 25 Gew.-% | mindestens eine Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, |
| c) | bis zu 15 Gew.-% | freier Kohlenstoff, Kohle oder Graphit, und |
| d) | bis zu 10 Gew.-% | Wasser, |

umfasst (bezogen auf die Zusammensetzung).

In den der Erfindung zugrundeliegenden Untersuchungen hat sich gezeigt, dass insbesondere eine Zusammensetzung umfassend Calciumcyanamid und mindestens eine Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, eine sehr gute Reduktion der Emission von Methan und Kohlenstoffdioxid aus Wirtschaftsdüngern zeigt. Diese Tatsache ist umso überraschender, als dass beispielsweise Calciumcarbonat alleine keine Wirkung auf diesen Effekt oder Calciumhydroxid alleine einen zusätzlichen Effekt auf die Emission dieser Gase zeigt (vgl. Beispiel 5).

Besonders bevorzugt ist damit auch die Verwendung einer Zusammensetzung umfassend
a) Calciumcyanamid und
b) mindestens eine Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon,
zur Reduzierung der Emission von Methan und/oder Kohlenstoffdioxid aus Wirtschaftsdünger während dessen Lagerung in einem Lagertank Gegenstand der vorliegenden Erfindung.

Besonders bevorzugt ist die Verwendung eine Zusammensetzung, die ein Reduktionspotential zur Reduzierung der Emission von Methan und/ oder Kohlenstoffdioxid aus Wirtschaftsdüngern von mindestens 4,0 I Methan und / oder Kohlenstoffdioxid pro kg Wirtschaftsdünger über einen Lagerzeitraum von mindestens 150 Tagen hat.

Weiterhin hat sich in diesen Untersuchungen herausgestellt, dass eine Mindestmenge an mindestens einer Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, enthalten sein sollte, um eine langanhaltende Reduktion von Methan bereitstellen zu können. So hat sich gezeigt, dass eine Mindestmenge von mindestens 5 Gew.-% an Verbindungen aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon in der Zusammensetzung enthalten sein sollte, um langanhaltende Reduktion der Emission von Methan bereitstellen zu können. Sollte dieser Mindestwert unterschritten werden, so kann ein Methanemissionsanstieg nach ca. 100 Tagen beobachtet werden (vgl. Beispiel 5).

Somit kann gemäß einer weiter bevorzugten Ausführung der erfindungsgemäßen Verwendung oder des erfindungsgemäßen Verfahren eine Zusammensetzung eingesetzt werden, die

| | | |
|---|---|---|
| a) | 60 bis 95 Gew.-% | Calciumcyanamid, |
| b) | 5 bis 25 Gew.-% | mindestens eine Verbindung aus der Gruppe der Carbonate, Oxide oder Hydroxide, insbesondere aus der Gruppe Mag nesi u m carbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, |
| c) | bis zu 15 Gew.-% | freier Kohlenstoff, Kohle oder Graphit, und |
| d) | bis zu 10 Gew.-% | Wasser, |

umfasst (bezogen auf die Zusammensetzung).

Unter Verwendung einer solchen Zusammensetzung kann eine Emission von Methan und/ oder Kohlenstoffdioxid sehr effektiv reduziert bzw. nahezu unterdrückt werden. Somit kann gemäß einer weiter bevorzugten Ausführung der erfindungsgemäßen Verwendung oder des erfindungsgemäßen Verfahren eine Zusammensetzung eingesetzt werden, die aus
a) 60 bis 95 Gew.-% Calciumcyanamid,
b) 10 bis 25 Gew.-% mindestens eine Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon,
c) bis zu 15 Gew.-% freier Kohlenstoff, Kohle oder Graphit, und
d) bis zu 10 Gew.-% Wasser,
besteht (bezogen auf die Zusammensetzung).

Weiterhin bevorzugt kann auch vorgesehen sein, dass die Zusammensetzung keine weitere, insbesondere als Düngemittel zugelassene Verbindung umfasst. Ganz besonders bevorzugt umfasst oder enthält die Zusammensetzung keinen Harnstoff. Harnstoff enthält einen Stickstoffanteil von 46,6 Gew.-% und würde somit zu einer signifikanten Erhöhung des Stickstoffgehaltes im Wirtschaftsdünger führen, was im Widerspruch zur Aufgabenstellung dieser Erfindung steht.

Gemäß einer weiter bevorzugten Ausführung kann auch vorgesehen sein, dass die Zusammensetzung weiterhin mindestens ein Salz aus der Gruppe der Nitrate, insbesondere aus der Gruppe Natriumnitrat, Kaliumnitrat, Magnesiumnitrat und Calciumnitrat, oder Mischungen hiervon umfasst.

Somit kann in der erfindungsgemäßen Verwendung oder dem erfindungsgemäßen Verfahren eine Zusammensetzung eingesetzt werden, die
a) Calciumcyanamid,
b) mindestens eine Verbindung aus der Gruppe der Carbonate, Oxide und Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, und
c) mindestens ein Salz aus der Gruppe der Nitrate, insbesondere aus der Gruppe Natriumnitrat, Kaliumnitrat, Magnesiumnitrat und Calciumnitrat, oder Mischungen hiervon, und
d) weiter bevorzugt freien Kohlenstoff, Kohle oder Graphit,
umfasst.

Die Menge an Nitraten kann variieren, wobei die Zusammensetzung bis zu 20 Gew.-% Nitrate umfassen kann. Bevorzugt kann die Zusammensetzung mindestens ein Salz aus der Gruppe der Nitrate, insbesondere aus der Gruppe Natriumnitrat, Kaliumnitrat, Magnesiumnitrat und Calciumnitrat, oder Mischungen hiervon umfassen, wobei die Menge an Nitraten höchstens 20 Gew.-%, bevorzugt höchstens 15 Gew.-%, weiter bevorzugt höchstens 10 Gew.-%, weiter bevorzugt höchstens 5 Gew.-%, und weiter bevorzugt mindestens 1 Gew.-% (bezogen auf die Zusammensetzung) beträgt.

Besonders bevorzugt kann in der erfindungsgemäßen Verwendung oder Verfahren somit eine Zusammensetzung eingesetzt werden, die

| | | |
|---|---|---|
| a) | 25 bis 95 Gew.-% | Calciumcyanamid, |
| b) | 5 bis 40 Gew.-% | mindestens eine Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, |
| c) | bis zu 20 Gew.-% | mindestens ein Salz aus der Gruppe der Nitrate, insbesondere aus der Gruppe Natriumnitrat, Kaliumnitrat, Magnesiumnitrat und Calciumnitrat, oder Mischungen hiervon, |
| d) | bis zu 15 Gew.-% | freier Kohlenstoff, Kohle oder Graphit, und |
| e) | bis zu 10 Gew.-% | Wasser, |

umfasst (bezogen auf die Zusammensetzung).

Gemäß einer besonders bevorzugten Ausführung der erfindungsgemäßen Verwendung oder des erfindungsgemäßen Verfahren kann eine Zusammensetzung eingesetzt werden, die

| | | |
|---|---|---|
| a) | 50 bis 80 Gew.-% | Calciumcyanamid, |
| b) | 5 bis 25 Gew.-% | mindestens eine Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, |
| c) | 1 bis 15 Gew.-% | freier Kohlenstoff, Kohle oder Graphit, und |
| d) | bis zu 10 Gew.-% | Wasser, |

umfasst (bezogen auf die Zusammensetzung).

Gemäß einer alternativ bevorzugten Ausführung der erfindungsgemäßen Verwendung oder des erfindungsgemäßen Verfahren kann eine Zusammensetzung eingesetzt werden, die

| | | |
|---|---|---|
| a) | 35 bis 55 Gew.-% | Calciumcyanamid, |
| b) | 15 bis 35 Gew.-% | mindestens eine Verbindung aus der Gruppe der Carbonate, Oxide oder Hydroxide, insbesondere aus der Gruppe Magnesiumcarbonat, Magnesiumhydrogencarbonat, Magnesiumoxid, Magnesiumhydroxid, Calciumcarbonat, Calciumhydrogencarbonat, Calciumoxid und Calciumhydroxid, oder Mischungen hiervon, |
| c) | 1 bis 20 Gew.-% | mindestens ein Nitrat aus der Gruppe Natriumnitrat, Kaliumnitrat, Magnesiumnitrat und Calciumnitrat, oder Mischungen hiervon, |
| d) | 1 bis 15 Gew.-% | freier Kohlenstoff, Kohle oder Graphit, und |
| e) | bis zu 10 Gew.-% | Wasser, |

umfasst (bezogen auf die Zusammensetzung).

Ganz besonders bevorzugt können in dem erfindungsgemäßen Verfahren und in der erfindungsgemäßen Verwendung als Zusammensetzung umfassend Calciumcyanamid Kalkstickstoff und weiter bevorzugt Kalkstickstoff oder nitrathaltiger Kalkstickstoff gemäß der Verordnung (EG) Nr. 2003/2003 des europäischen Parlaments und des Rates vom 13. Oktober 2003 über Düngemittel, eingesetzt werden.

Die erfindungsgemäße Zusammensetzung kann sowohl bei der erfindungsgemäßen Verwendung als auch in dem erfindungsgemäßen Verfahren in unterschiedlichen Applikationsform eingesetzt und den Bedürfnissen des Verwenders angepasst werden. So können die hiermit beschriebenen Zusammensetzungen in Form eines Feststoffes, insbesondere in Form eines Pulvers, eines Granulates, oder in Form einer Suspension, insbesondere eine Suspension dieser Feststoffe, eingesetzt werden.

Die anzuwendende Gesamtmenge der Zusammensetzung umfassend Calciumcyanamid kann ebenfalls sowohl bei der erfindungsgemäßen Verwendung als auch in dem erfindungsgemäßen Verfahren in relativ weiten Grenzen variiert werden. So hat sich gezeigt, dass die Zusammensetzung in einer Menge von 0,5 bis 10 kg pro 1 m³ Wirtschaftsdünger, insbesondere von 1,0 bis 10 kg pro 1 m³ Wirtschaftsdünger, insbesondere von 1,0 bis 8 kg pro 1 m³ Wirtschaftsdünger, besonders bevorzugt von 1,0 bis 6 kg pro 1 m³ Wirtschaftsdünger und ganz besonders bevorzugt von 1,0 bis 5 kg pro 1 m³ Wirtschaftsdünger eingesetzt werden kann. Wesentlich ist, dass die Zusammensetzung Calciumcyanamid, insbesondere in den hierin beschriebenen Mengen, umfasst. Somit kann die Zusammensetzung weiter bevorzugt jede der oben aufgeführten Zusammensetzungen aufweisen. Unabhängig hiervon kann die Zusammensetzung somit auch weitere Inhaltsstoffe aufweisen.

### Beispiele

### Beispiel 1

### Reduzierung der Methan- und CO₂-Emission aus Rindergülle

### 1.1 Einsatzstoffe:

Frische Rindergülle (= Wirtschaftsdünger):
- Aus Milchviehstall (Gemeinde Obing, Bayern)
- Ohne Verdünnung durch Spülwässer, Reinigungswässer oder ähnliche Wässer
- Ohne Einstreu
- Entnommen aus der Vorkammer des Ablaufkanals Richtung Güllegrube

| | | |
|---|---|---|
| Analysen: | gesamt-Stickstoff: | 0,40 Gew.-% |
| | Ammonium (NH₄): | 0,13 Gew.-% (entspricht 0,10 % NH₄-Stickstoff) |
| | Nitrat-Stickstoff: | < 20 mg/kg |
| | Trockensubstanz: | 11,93 Gew.-% |
| | pH-Wert: | 7,4 (13 °C) |
| | Leitfähigkeit: | 19,5 mS/cm (13 °C) |

Zusammensetzung umfassend Calciumcyanamid (Zusammensetzung 1):

| | |
|---|---|
| - Calciumcyanamid: | 44,0 Gew.-% |
| - Calciumnitrat: | 11,1 Gew.-% |
| - Calciumhydroxid: | 13,4 Gew.-% |
| - Calciumcarbonat: | 10,0 Gew.-% |
| - Freier Kohlenstoff: | 10,0 Gew.-% |
| - Magnesiumcarbonat: | 2,3 Gew.-% |
| - Wasser: | 9,2 Gew.-% |

**Düngemittel "Nitrathaitiger Kalkstickstoff" entsprechend A.1. Stickstoffdünger Nr. 3 (b)** gemäß Verordnung (EG) Nr. 2003/2003 des europäischen Parlaments und des Rates vom 13. Oktober 2003 über Düngemittel.

### 1.2 Durchführung der Versuche:

In einem 6 Liter Weithalsbehälter aus Polyethylen (PE) mit dicht schließendem Deckel wurden 3024 mL (entspricht 2953 g) Rindergülle der beschriebenen Zusammensetzung (vgl. 1.1) vorgelegt. Anschließend wurden 8,86 g der Zusammensetzung 1 zugegeben (entspricht 2,93 kg Zusammensetzung umfassend Calciumcyanamid oder 16,1 mol Calciumcyanamid pro m³ Rindergülle) und eingerührt. Nach dem Einrühren wurde der pH-Wert und die Leitfähigkeit in der Mischung gemessen, anschließend sofort der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. So wurde verhindert, dass CO₂ aus der Luft die Messergebnisse verfälscht. Die Mischung wurde für exakt 156 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Die gemessenen Werte nach dem Einrühren:

| | |
|---|---|
| pH-Wert: | 7,5 (22 °C) |
| Leitfähigkeit: | 19,8 mS/cm (22 °C) |

### Referenzversuch:

In einem 6 Liter Weithalsbehälter aus Polyethylen (PE) mit dicht schließendem Deckel wurden 3018 mL (entspricht 2947 g) Rindergülle der beschriebenen Zusammensetzung (vgl. 1.1) vorgelegt. Anschließend wurde der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. Die Mischung wurde für exakt 156 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Während der Versuchslaufzeit wurden nach 3, 16, 59, 73, 86, 99, 108, 115, 122, 128, 135, 142, 149 und 156 Tagen die Gasspeicherbeutel gewechselt, das aufgefangene Gasvolumen volumetrisch bestimmt und die Gaszusammensetzung per Gaschromatographie gemessen.

### 1.3 Ergebnisse:

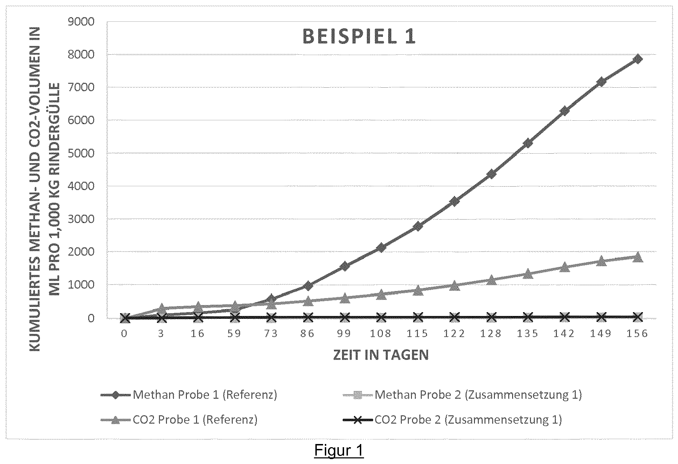

Die entstandenen Gasvolumina an Methan und Kohlenstoffdioxid sind in nachfolgender Tabelle 1 dargestellt (vgl. auch Figur 1 - graphische Darstellung Methan- und CO₂ - Emissionen aus Beispiel 1). Die Ergebnisse beziehen sich auf 1,000 kg Rindergülle je Versuchsvariante.

**Tabelle 1: entstandene Gasvolumina, bezogen auf 1,000 kg Rindergülle**

| **Versuchslaufzeit** | **Probe 1** (Referenz) | | **Probe 2** (Zusammensetzung 1) | |
|---|---|---|---|---|
| [Tage] | Methan [mL] | CO₂ [mL] | Methan [mL] | CO₂ [mL] |
| 3 | 95 [95] | 291 [291] | 2 [2] | 4 [4] |
| 16 | 65 [160] | 52 [343] | 2 [4] | 16 [20] |
| 59 | 88 [248] | 27 [370] | 1 [5] | 3 [23] |
| 73 | 324 [572] | 54 [424] | 2 [7] | 2 [25] |
| 86 | 401 [973] | 89 [513] | 2 [9] | 2 [27] |
| 99 | 592 [1565] | 95 [608] | 2 [11] | 0 [27] |
| 108 | 564 [2129] | 104 [712] | 2 [13] | 2 [29] |
| 115 | 651 [2780] | 124 [836] | 1 [14] | 2 [31] |
| 122 | 756 [3536] | 147 [983] | 1 [15] | 0 [31] |
| 128 | 833 [4369] | 169 [1152] | 1 [16] | 1 [32] |
| 135 | 934 [5303] | 190 [1342] | 2 [18] | 2 [34] |
| 142 | 985 [6288] | 205 [1547] | 2 [20] | 1 [35] |
| 149 | 876 [7164] | 181 [1728] | 2 [22] | 2 [37] |
| 156 | 707 [7871] | 125 [1853] | 1 [23] | 2 [39] |

Die Werte beziehen sich auf die Zeitperiode, die Werte in Klammern sind die kumulierten Werte über den gesamten Versuchszeitraum. Eine grafische Darstellung ist mit Figur 1 wiedergeben.

### 1.4 Zusammenfassung der Ergebnisse:

➢ Methanemissionen:
   Nach 156 Tagen Lagerung wurden im Referenzversuch (Probe 1) 7871 mL Methangas bezogen auf 1,000 kg Rindergülle freigesetzt. Durch Zusatz von 8,86 g Calciumcyanamid in Form der Zusammensetzung 1 umfassend Calciumcyanamid (Probe 2), was 2,93 kg Zusammensetzung umfassend Calciumcyanamid oder einer Stoffmengenkonzentration von 16,1 mol Calciumcyanamid pro m³ Rindergülle entspricht, lassen sich diese Emissionen um 99,7 % auf 23 mL Methangas reduzieren.
➢ CO₂-Emissionen:
   Hier ergibt sich ein ähnliches Bild. Nach 156 Tagen Lagerung wurden im Referenzversuch (Probe 1) 1853 mL CO₂-Gas bezogen auf 1,000 kg Rinderflüssigmist freigesetzt. Durch Zusatz von 8,86 g Calciumcyanamid in Form der Zusammensetzung 1 umfassend Calciumcyanamid (Probe 2), was 2,93 kg Zusammensetzung umfassend Calciumcyanamid oder einer Stoffmengenkonzentration von 16,1 mol Calciumcyanamid pro m³ Rindergülle entspricht, lassen sich diese Emissionen um 97,9 % auf 39 mL CO₂-Gas reduzieren.

### Beispiel 2

### Reduzierung der Methan- und CO₂-Emission aus Rindergülle

### 2.1 Einsatzstoffe:

Frische Rindergülle (= Wirtschaftsdünger):
- Aus Milchviehstall (Gemeinde Obing, Bayern)
- Ohne Verdünnung durch Spülwässer, Reinigungswässer oder ähnliche Wässer
- Ohne Einstreu
- Entnommen aus der Vorkammer des Ablaufkanals Richtung Güllegrube

| | | |
|---|---|---|
| Analysen: | gesamt-Stickstoff: | 0,48 Gew.-% |
| | Ammonium (NH₄): | 0,22 Gew.-% (entspricht 0,17 % NH₄-Stickstoff) |
| | Nitrat-Stickstoff: | < 20 mg/kg |
| | Trockensubstanz: | 10,30 Gew.-% |
| | pH-Wert: | 6,8 (24 °C) |
| | Leitfähigkeit: | 18,5 mS/cm (24 °C) |

Zusammensetzung umfassend Calciumcyanamid (Zusammensetzung 2):

| | |
|---|---|
| - Calciumcyanamid: | 67,7 Gew.-% |
| - Calciumoxid: | 13,2 Gew.-% |
| - Calciumhydroxid: | 3,2 Gew.-% |
| - Freier Kohlenstoff: | 13,3 Gew.-% |
| - Wasser | 2,6 Gew.-% |

**Düngemittel "Kalkstickstoff" entsprechend A.1. Stickstoffdünger Nr. 3 (a) gemäß Verordnung** (EG) Nr. 2003/2003 des europäischen Parlaments und des Rates vom 13. Oktober 2003 über Düngemittel.

### 2.2 Durchführung der Versuche:

In einem 6 Liter Weithalsbehälter aus Polyethylen (PE) mit dicht schließendem Deckel wurden 3090 mL (entspricht 3032 g) Rindergülle der beschriebenen Zusammensetzung (vgl. 2.1) vorgelegt. Anschließend wurden 4,25 g der Zusammensetzung 2 zugegeben (entspricht 1,38 kg Zusammensetzung umfassend Calciumcyanamid oder 11,6 mol Calciumcyanamid pro m³ Rindergülle) und eingerührt. Nach dem Einrühren wurde der pH-Wert und die Leitfähigkeit in der Mischung gemessen, anschließend sofort der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. So wurde verhindert, dass CO₂ aus der Luft die Messergebnisse verfälscht. Die Mischung wurde für exakt 156 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Die gemessenen Werte nach dem Einrühren:

| | |
|---|---|
| pH-Wert: | 7,5 (24 °C) |
| Leitfähigkeit: | 18,9 mS/cm (24 °C) |

### Referenzversuch:

In einem 6 Liter Weithalsbehälter aus Polyethylen (PE) mit dicht schließendem Deckel wurden 3038 mL (entspricht 2981 g) Rindergülle der beschriebenen Zusammensetzung (vgl. 2.1) vorgelegt. Anschließend wurde der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. Die Mischung wurde für exakt 156 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Während der Versuchslaufzeit wurden nach 7, 44, 57, 70, 79, 89, 96, 103, 110, 117, 127, 141 und 156 Tagen die Gasspeicherbeutel gewechselt, das aufgefangene Gasvolumen volumetrisch bestimmt und die Gaszusammensetzung per Gaschromatographie gemessen.

### 2.3 Ergebnisse:

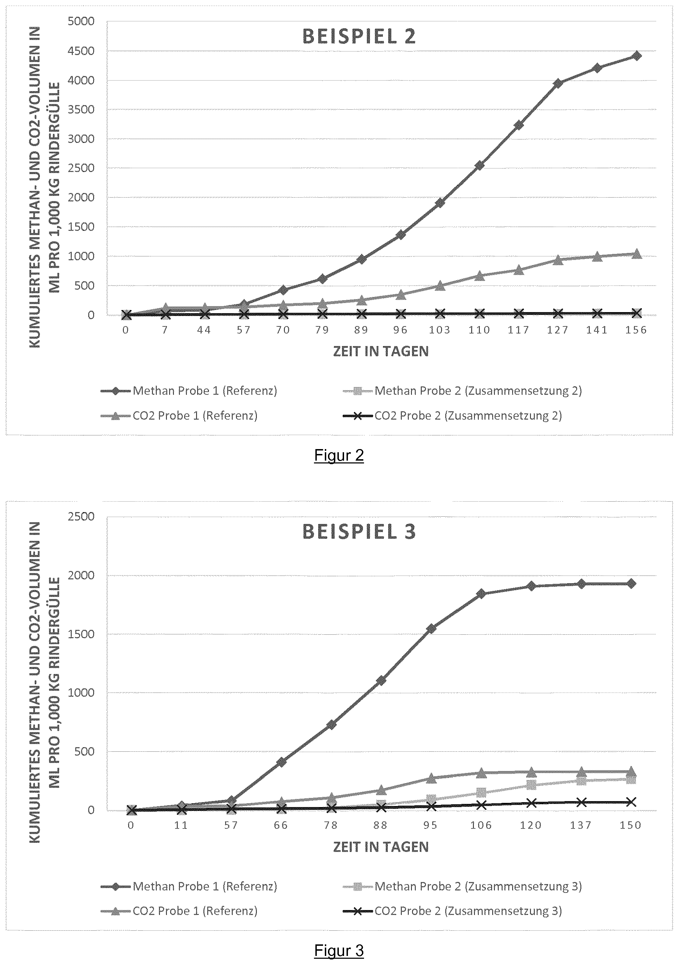

Die entstandenen Gasvolumina an Methan und Kohlenstoffdioxid sind in nachfolgender Tabelle 2 dargestellt (vgl. auch Figur 2 - graphische Darstellung der Methan- und CO₂-Emissionen aus Beispiel 2). Die Ergebnisse beziehen sich auf 1,000 kg Rindergülle je Versuchsvariante.

**Tabelle 2: entstandene Gasvolumina, bezogen auf 1,000 kg Rindergülle**

| **Versuchslaufzeit** | **Probe 1** (Referenz) | | **Probe 2** (Zusammensetzung 2) | |
|---|---|---|---|---|
| [Tage] | Methan [mL] | CO₂ [mL] | Methan [mL] | CO₂ [mL] |
| 7 | 70 [70] | 118 [118] | 2 [2] | 6 [6] |
| 44 | 11 [81] | 5 [123] | 3 [5] | 5 [11] |
| 57 | 101 [182] | 15 [138] | 1 [6] | 2 [13] |
| 70 | 244 [426] | 31 [169] | 2 [8] | 2 [15] |
| 79 | 190 [616] | 26 [195] | 2 [10] | 2 [17] |
| 89 | 331 [947] | 58 [253] | 2 [12] | 2 [19] |
| 96 | 416 [1363] | 94 [347] | 2 [14] | 1 [20] |
| 103 | 544 [1907] | 153 [500] | 2 [16] | 2 [22] |
| 110 | 637 [2544] | 171 [671] | 2 [18] | 2 [24] |
| 117 | 691 [3235] | 198 [769] | 1 [19] | 1 [25] |
| 127 | 714 [3949] | 168 [937] | 2 [21] | 1 [26] |
| 141 | 261 [4210] | 58 [995] | 2 [23] | 2 [28] |
| 156 | 206 [4416] | 48 [1043] | 2 [25] | 2 [30] |

Die Werte beziehen sich auf die Zeitperiode, die Werte in Klammern sind die kumulierten Werte über den gesamten Versuchszeitraum. Eine grafische Darstellung ist mit Figur 2 wiedergeben.

### 2.4 Zusammenfassung der Ergebnisse:

➢ Methanemissionen:
   Nach 156 Tagen Lagerung wurden im Referenzversuch (Probe 1) 4416 mL Methangas bezogen auf 1,000 kg Rindergülle freigesetzt. Durch Zusatz von 4,25 g Calciumcyanamid in Form der Zusammensetzung 2 umfassend Calciumcyanamid (Probe 2), was 1,38 kg Zusammensetzung umfassend Calciumcyanamid oder einer Stoffmengenkonzentration von 11,6 mol Calciumcyanamid pro m³ Rindergülle entspricht, lassen sich diese Emissionen um 99,4 % auf 25 mL Methangas reduzieren.
➢ CO₂-Emissionen:
   Hier ergibt sich ein ähnliches Bild. Nach 156 Tagen Lagerung wurden im Referenzversuch (Probe 1) 1043 mL CO₂-Gas bezogen auf 1,000 kg Rinderflüssigmist freigesetzt. Durch Zusatz von 4,25 g Calciumcyanamid in Form der Zusammensetzung 2 umfassend Calciumcyanamid (Probe 2), was 1,38 kg Zusammensetzung umfassend Calciumcyanamid oder einer Stoffmengenkonzentration von 11,6 mol Calciumcyanamid pro m³ Rindergülle entspricht, lassen sich diese Emissionen um 97,1 % auf 30 mL CO₂-Gas reduzieren.

### Beispiel 3 - Vergleichsbeispiel mit Hydroaencvanamid-Lösung

### Reduzierung der Methan- und CO₂-Emission aus Rindergülle

### 3.1 Einsatzstoffe:

Frische Rindergülle (= Wirtschaftsdünger):
- Aus Milchviehstall (Gemeinde Obing, Bayern)
- Ohne Verdünnung durch Spülwässer, Reinigungswässer oder ähnliche Wässer
- Ohne Einstreu
- Entnommen aus der Vorkammer des Ablaufkanals Richtung Güllegrube

| | | |
|---|---|---|
| Analysen: | gesamt-Stickstoff: | 0,42 Gew.-% |
| | Ammonium (NH₄): | 0,23 Gew.-% (entspricht 0,18 % NH₄-Stickstoff) |
| | Nitrat-Stickstoff: | < 20 mg/kg |
| | Trockensubstanz: | 9,69 Gew.-% |
| | pH-Wert: | 7,5 (23 °C) |
| | Leitfähigkeit: | 18,0 mS/cm (23 °C) |

Zusammensetzung umfassend Hydrogencyanamid (Zusammensetzung 3):

| | |
|---|---|
| - Hydrogencyanamid: | 50,2 Gew.-% |
| - Wasser: | 49,8 Gew.-% |

### 3.2 Durchführung der Versuche:

In einem 6 Liter Weithalsbehälter aus Polyethylen (PE) mit dicht schließendem Deckel wurden 3030 mL (entspricht 2979 g) Rindergülle der beschriebenen Zusammensetzung (vgl. 3.1) vorgelegt. Anschließend wurden 2,98 g der Zusammensetzung 3 zugegeben (entspricht 0,983 kg Zusammensetzung umfassend Hydrogencyanamid oder 12,2 mol Hydrogencyanamid pro m³ Rindergülle) und eingerührt. Nach dem Einrühren wurde der pH-Wert und die Leitfähigkeit in der Mischung gemessen, anschließend sofort der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. So wurde verhindert, dass CO₂ aus der Luft die Messergebnisse verfälscht. Die Mischung wurde für exakt 150 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Die gemessenen Werte nach dem Einrühren:

| | |
|---|---|
| pH-Wert: | 7,5 (23 °C) |
| Leitfähigkeit: | 18,0 mS/cm (23 °C) |

### Referenzversuch:

In einem 6 Liter Weithalsbehälter aus Polyethylen (PE) mit dicht schließendem Deckel wurden 3075 mL (entspricht 3023 g) Rindergülle der beschriebenen Zusammensetzung (vgl. 3.1) vorgelegt. Anschließend wurde der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. Die Mischung wurde für exakt 150 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Während der Versuchslaufzeit wurden nach 11, 57, 66, 78, 88, 95, 106, 120, 137 und 150 Tagen die Gasspeicherbeutel gewechselt, das aufgefangene Gasvolumen volumetrisch bestimmt und die Gaszusammensetzung per Gaschromatographie gemessen.

### 3.3 Ergebnisse:

Die entstandenen Gasvolumina an Methan und Kohlenstoffdioxid sind in nachfolgender Tabelle 3 dargestellt (vgl. auch Figur 3 - graphische Darstellung der Methan- und CO₂-Emissionen aus Vergleichsbeispiel 3). Die Ergebnisse beziehen sich auf 1,000 kg Rindergülle je Versuchsvariante.

**Tabelle 3: entstandene Gasvolumina, bezogen auf 1,000 kg Rindergülle**

| **Versuchslaufzeit** | **Probe 1** (Referenz) | | **Probe 2** (Zusammensetzung 3) | |
|---|---|---|---|---|
| [Tage] | Methan [mL] | CO₂ [mL] | Methan [mL] | CO₂ [mL] |
| 11 | 41 [41] | 31 [31] | 2 [2] | 4 [4] |
| 57 | 44 [85] | 6 [37] | 3 [5] | 8 [12] |
| 66 | 325 [410] | 38 [75] | 4 [9] | 2 [14] |
| 78 | 319 [729] | 35 [110] | 12 [21] | 3 [17] |
| 88 | 375 [1104] | 66 [176] | 29 [50] | 6 [23] |
| 95 | 444 [1548] | 100 [276] | 43 [93] | 9 [32] |
| 106 | 296 [1844] | 43 [319] | 59 [152] | 14 [46] |
| 120 | 67 [1911] | 7 [326] | 66 [218] | 17 [63] |
| 137 | 17 [1928] | 2 [328] | 38 [256] | 7 [70] |
| 150 | 3 [1931] | 2 [330] | 13 [269] | 2 [72] |

Die Werte beziehen sich auf die Zeitperiode, die Werte in Klammern sind die kumulierten Werte über den gesamten Versuchszeitraum. Eine grafische Darstellung ist mit Figur 3 wiedergeben.

### 3.4 Zusammenfassung der Ergebnisse:

➢ Methanemissionen:
   Nach 150 Tagen Lagerung wurden im Referenzversuch (Probe 1) 1931 mL Methangas bezogen auf 1,000 kg Rindergülle freigesetzt. Durch Zusatz von 2,98 g Hydrogencyanamid in Form der Zusammensetzung 3 (Probe 2), was 0,983 kg Zusammensetzung umfassend Hydrogencyanamid oder einer Stoffmengenkonzentration von 12,2 mol Hydrogencyanamid pro m³ Rindergülle entspricht, lassen sich diese Emissionen nur um 82,9 % auf 330 mL reduzieren. Zudem war bereits nach 78 Tagen Lagerung eine signifikante Methanentwicklung zu messen.
➢ CO₂-Emissionen:
   Nach 150 Tagen Lagerung wurden im Referenzversuch (Probe 1) 330 mL CO₂-Gas bezogen auf 1,000 kg Rinderflüssigmist freigesetzt. Durch Zusatz von 2,98 g Hydrogencyanamid in Form der Zusammensetzung 3 (Probe 2), was 0,983 kg Zusammensetzung umfassend Hydrogencyanamid oder einer Stoffmengenkonzentration von 12,2 mol Hydrogencyanamid pro m³ Rindergülle entspricht, lassen sich diese Emissionen nur um 78,2 % auf 72 mL reduzieren.

Verglichen mit Beispiel 2, wo eine vergleichbare Stoffmengenkonzentration zugegeben wurde, jedoch als Zusammensetzung umfassend Calciumcyanamid, sind die Gasemissionen im Vergleichsbeispiel - sowohl Methan als auch CO₂ - signifikant höher in der absoluten Menge. Weiterhin setzen die Gasemissionen nach wesentlich kürzerer Zeit wieder ein, im Beispiel 3 konnte eine deutliche Methanemission nach 78 Tagen Lagerung gemessen werden, im Beispiel 2 hingegen war nach 156 Tagen Lagerung noch keine signifikante Gasemission zu detektieren.

### Beispiel 4

### Verwendung einer Zusammensetzung umfassend Calciumcyanamid als Gärstopper oder Gärinhibitor einer anaeroben Gärung von Rindergülle und als Inhibitor eines mikrobiellen Abbaus von organischen Substanzen in Wirtschaftsdünger während der Lagerung derselben

### 4.1 Einsatzstoffe:

Frische Rindergülle (= Wirtschaftsdünger):
- Aus Milchviehstall (Gemeinde Obing, Bayern)
- Ohne Verdünnung durch Spülwässer, Reinigungswässer oder ähnliche Wässer
- Ohne Einstreu
- Entnommen aus der Vorkammer des Ablaufkanals Richtung Güllegrube

| | | |
|---|---|---|
| Analysen: | gesamt-Stickstoff: | 0,48 Gew.-% |
| | Ammonium (NH₄): | 0,22 Gew.-% (entspricht 0,17 % NH₄-Stickstoff) |
| | Nitrat-Stickstoff: | < 20 mg/kg |
| | Trockensubstanz: | 10,30 Gew.-% |
| | pH-Wert: | 6,8 (24 °C) |
| | Leitfähigkeit: | 18,5 mS/cm (24 °C) |

Zusammensetzung umfassend Calciumcyanamid (Zusammensetzung 1):

| | |
|---|---|
| - Calciumcyanamid: | 44,0 Gew.-% |
| - Calciumnitrat: | 11,1 Gew.-% |
| - Calciumhydroxid: | 13,4 Gew.-% |
| - Calciumcarbonat: | 10,0 Gew.-% |
| - Freier Kohlenstoff: | 10,0 Gew.-% |
| - Magnesiumcarbonat: | 2,3 Gew.-% |
| - Wasser: | 9,2 Gew.-% |

**Düngemittel "Nitrathaitiger Kalkstickstoff" entsprechend A.1. Stickstoffdünger Nr. 3 (b) gemäß** Verordnung (EG) Nr. 2003/2003 des europäischen Parlaments und des Rates vom 13. Oktober 2003 über Düngemittel.

### 4.2 Durchführung der Versuche:

In einem 6 Liter Weithalsbehälter aus Polyethylen (PE) mit dicht schließendem Deckel wurden 3058 mL (entspricht 3001 g) Rindergülle der beschriebenen Zusammensetzung (vgl. 4.1) vorgelegt. Anschließend wurde der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. So wurde verhindert, dass CO₂ aus der Luft die Messergebnisse verfälscht. Die Mischung wurde für exakt 110 Tage ohne Rühren oder Bewegung bei einer Temperatur von 23 ± 1 °C und einem Luftdruck von 960 bis 980 hPa und 493 m über Normalhöhennull (NHN) gelagert. Während der Versuchslaufzeit wurden nach 7, 44, 57, 70, 79, 89, 96, 103 und 110 Tagen die Gasspeicherbeutel gewechselt, das aufgefangene Gasvolumen volumetrisch bestimmt und die Gaszusammensetzung per Gaschromatographie gemessen.

Am 110. Versuchstag wurde der Behälter in einen Handschuhkasten, auch Glovebox genannt, gestellt und diese mit Stickstoff gespült, bis sich kleiner 0,1 Vol.-% Sauerstoff in der Glovebox befanden. Anschließend wurde der Behälterdeckel abgeschraubt und 6,60 g der Zusammensetzung 1 zugegeben (entspricht 2,16 kg Zusammensetzung umfassend Calciumcyanamid oder 11,9 mol Calciumcyanamid pro m³ Rindergülle) und eingerührt. Danach wurde Behälterdeckel sofort wieder aufgeschraubt, der Weithalsbehälter dicht verschlossen, ein Gasspeicherbeutel (Nennvolumen 5,6 Liter) angeschlossen und weiter ohne Rühren oder Bewegung bei einer Temperatur von 23 ± 1 °C und einem Luftdruck von 960 bis 980 hPa und 493 m über Normalhöhennull (NHN) gelagert.

Nach weiteren 7, 17, 31 und 46 Tagen, was 117, 127, 141 und 156 Tage gesamt-Laufzeit entspricht, wurden die Gasspeicherbeutel gewechselt, das gespeicherte Gasvolumen volumetrisch bestimmt sowie die Gaszusammensetzung per Gaschromatographie analysiert.

### Referenzversuch:

In einem 6 Liter Weithalsbehälter aus Polyethylen (PE) mit dicht schließendem Deckel wurden 3038 mL (entspricht 2981 g) Rindergülle der beschriebenen Zusammensetzung (vgl. 4.1) vorgelegt. Anschließend wurde der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. Die Mischung wurde für exakt 156 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Während der Versuchslaufzeit wurden nach 7, 44, 57, 70, 79, 89, 96, 103, 110, 117, 127, 141 und 156 Tagen die Gasspeicherbeutel gewechselt, das aufgefangene Gasvolumen volumetrisch bestimmt und die Gaszusammensetzung per Gaschromatographie gemessen.

### 4.3 Ergebnisse:

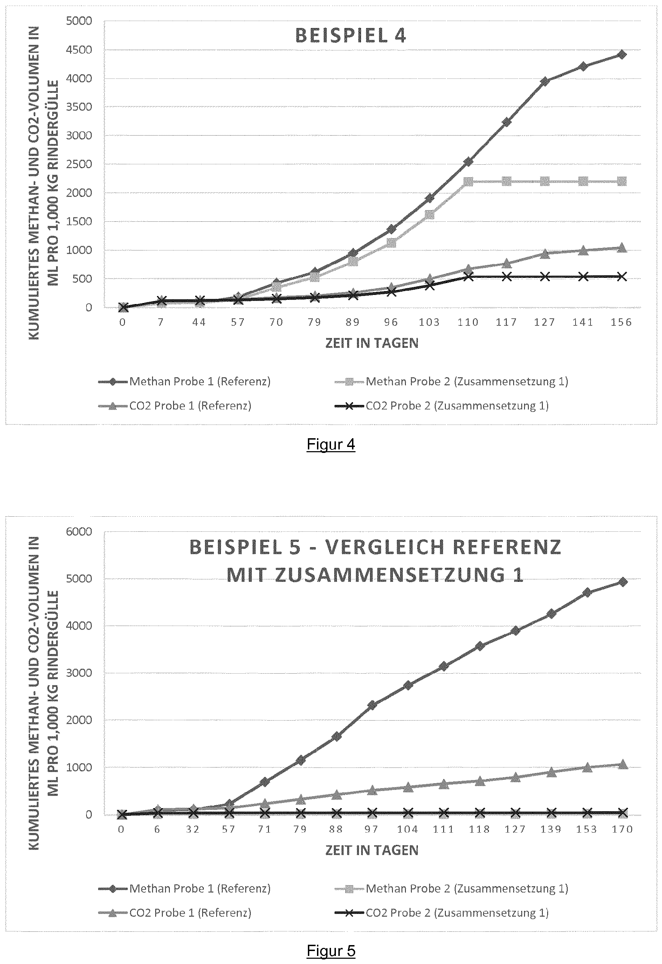

Die entstandenen Gasvolumina an Methan und Kohlenstoffdioxid sind in nachfolgender Tabelle 4 dargestellt (vgl. auch Figur 4 - graphische Darstellung der Methan- und CO₂-Emissionen aus Beispiel 4). Die Ergebnisse beziehen sich auf 1,000 kg Rindergülle je Versuchsvariante.

**Tabelle 4: entstandene Gasvolumina, bezogen auf 1,000 kg Rindergülle**

| **Versuchslaufzeit** | **Probe 1** (Referenz) | | **Probe 2** (Ab 110. Tag mit Zusammensetzung 1) | |
|---|---|---|---|---|
| [Tage] | Methan [mL] | CO₂ [mL] | Methan [mL] | CO₂ [mL] |
| 7 | 70 [70] | 118 [118] | 70 [70] | 113 [113] |
| 44 | 11 [81] | 5 [123] | 12 [82] | 5 [118] |
| 57 | 101 [182] | 15 [138] | 61 [143] | 10 [128] |
| 70 | 244 [426] | 31 [169] | 208 [351] | 22 [150] |
| 79 | 190 [616] | 26 [195] | 177 [528] | 21 [171] |
| 89 | 331 [947] | 58 [253] | 270 [798] | 38 [209] |
| 96 | 416 [1363] | 94 [347] | 332 [1130] | 59 [268] |
| 103 | 544 [1907] | 153 [500] | 490 [1620] | 115 [383] |
| 110 | 637 [2544] | 171 [671] | 576 [2196] | 152 [535] |
| 117 | 691 [3235] | 198 [769] | 2 [2198] | 2 [537] |
| 127 | 714 [3949] | 168 [937] | 0 [2198] | 0 [537] |
| 141 | 261 [4210] | 58 [995] | 0 [2198] | 0 [537] |
| 156 | 206 [4416] | 48 [1043] | 0 [2198] | 1 [538] |

Die Werte beziehen sich auf die Zeitperiode, die Werte in Klammern sind die kumulierten Werte über den gesamten Versuchszeitraum. Eine grafische Darstellung ist mit Figur 4 wiedergeben.

### 4.4 Zusammenfassung der Ergebnisse:

➢ Methanemissionen:
   Nach 156 Tagen Lagerung wurden im Referenzversuch (Probe 1) 4416 mL Methangas bezogen auf 1,000 kg Rindergülle freigesetzt. Die Entwicklung der Methanfreisetzung in der Probe 2 war bis zum 110. Tag ähnlich zu Probe 1. Durch Zusatz von 6,60 g Calciumcyanamid in Form der Zusammensetzung 1 umfassend Calciumcyanamid am 110. Tag zu Probe 2, was 2,16 kg Zusammensetzung umfassend Calciumcyanamid oder einer Stoffmengenkonzentration von 11,9 mol Calciumcyanamid pro m³ Rindergülle entspricht, wurde die Methanfreisetzung sofort und für die fortlaufende Versuchszeit nachhaltig gestoppt. In den 46 Tagen nach der Zugabe von Calciumcyanamid in Form der Zusammensetzung 1 wurden nur noch 2 mL Methan freigesetzt.
➢ CO₂-Emissionen:
   Hier ergibt sich ein ähnliches Bild. Nach 156 Tagen Lagerung wurden im Referenzversuch (Probe 1) 1043 mL CO₂-Gas bezogen auf 1,000 kg Rindergülle freigesetzt. Die Entwicklung der CO₂-Freisetzung in der Probe 2 war bis zum 110. Tag ähnlich zu Probe 1. Durch Zusatz von 6,60 g Calciumcyanamid in Form der Zusammensetzung 1 umfassend Calciumcyanamid am 110. Tag zu Probe 2, was 2,16 kg Zusammensetzung umfassend Calciumcyanamid oder einer Stoffmengenkonzentration von 11,9 mol Calciumcyanamid pro m³ Rindergülle entspricht, wurde die CO₂-Freisetzung sofort und für die fortlaufende Versuchszeit nachhaltig gestoppt. In den 46 Tagen nach der Zugabe von Calciumcyanamid in Form der Zusammensetzung 1 wurden nur noch 3 mL CO₂ freigesetzt.

### Zusammenfassung der Ergebnisse aus Beispiel 1 bis 4

Durch Zugabe von 2,93 kg Calciumcyanamid in Form der Zusammensetzung 1 pro m³ Rindergülle und anschließendem Inkontaktbringen wird nach 156tägiger Lagerung die Methanfreisetzung um 99,7 % und die CO₂-Freisetzung um 97,9 % gegenüber dem Referenzversuch reduziert. Ein sehr ähnliches Ergebnis ergibt sich bei analoger Vorgehensweise und Lagerdauer bei der Zugabe von 1,38 kg Calciumcyanamid in Form der Zusammensetzung 2 pro m³ Rindergülle. Die Methanfreisetzung wird um 99,4 % und die CO₂-Freisetzung um 97,1 % reduziert. Hingegen wird bei der Zugabe von 0,983 kg Hydrogencyanamid-Lösung in Form der Zusammensetzung 3 pro m³ Rindergülle, was einer sehr ähnlichen Stoffmengenkonzentration im Vergleich zu den Beispielen 2 und 4 entspricht, nach 150tägiger Lagerung die Methanfreisetzung nur um 82,9 % und die CO₂-Freisetzung nur um 78,2 % gegenüber dem Referenzversuch reduziert. Weiterhin wird gezeigt, dass durch Zugabe und Inkontaktbringen von 2,16 kg Calciumcyanamid in Form der Zusammensetzung 1 pro m³ Rindergülle zu einem Zeitpunkt, als die Rindergülle massiv Methan und CO₂ freisetzt, diese Freisetzung nahezu gestoppt wird. So werden ab dem Zeitpunkt der Zugabe und einem Zeitraum von 46 Tagen danach nur noch 2 mL Methan und 3 mL CO₂ pro 1,000 kg Rindergülle freigesetzt, im Referenzversuch sind dies 1872 mL Methan und 372 ml CO₂ pro 1,000 kg Rindergülle.

Die absolute Menge an freisetzbaren Gasen wie Methan und Kohlenstoffdioxid aus Wirtschaftsdüngern ist von mehreren Faktoren abhängig:
- Art und Ursprung des Wirtschaftsdüngers
- Verweildauer, Temperatur und Sauerstoffzufuhr in Form von Frischluft zum Wirtschaftsdünger im Sammelkanal bis zur Entnahme
- Nährstoffgehalt in den tierischen Ausscheidungen als Folge von Futterzusammensetzung für die Nutztiere

Ersichtlich ist das in den Beispielen 1 bis 4. Obwohl in diesen Beispielen überall frisch entnommener Wirtschaftsdünger derselben Art und aus demselben Ursprung zum Einsatz kam, waren die freigesetzten Mengen an Methan und Kohlenstoffdioxid zwischen den Referenzen unterschiedlich hoch.

### Beispiel 5

### Reduzierung der Methan- und CO₂-Emission aus Rindergülle

### 5.1 Einsatzstoffe:

Frische Rindergülle (= Wirtschaftsdünger):
- Aus Milchviehstall (Gemeinde Obing, Bayern)
- Ohne Verdünnung durch Spülwässer, Reinigungswässer oder ähnliche Wässer
- Ohne Einstreu
- Entnommen aus der Vorkammer des Ablaufkanals Richtung Güllegrube

| | | |
|---|---|---|
| Analysen: | gesamt-Stickstoff: | 0,43 Gew.-% |
| | Ammonium (NH₄): | 0,17 Gew.-% (entspricht 0,13 % NH₄-Stickstoff) |
| | Nitrat-Stickstoff: | < 20 mg/kg |
| | Trockensubstanz: | 9,87 Gew.-% |
| | pH-Wert: | 7,0 (15 °C) |
| | Leitfähigkeit: | 20,1 mS/cm (15 °C) |

Zusammensetzung umfassend Calciumcyanamid (Zusammensetzung 1):

| | |
|---|---|
| - Calciumcyanamid: | 44,0 Gew.-% |
| - Calciumnitrat: | 11,1 Gew.-% |
| - Calciumhydroxid: | 13,4 Gew.-% |
| - Calciumcarbonat: | 10,0 Gew.-% |
| - Freier Kohlenstoff: | 10,0 Gew.-% |
| - Magnesiumcarbonat: | 2,3 Gew.-% |
| - Wasser: | 9,2 Gew.-% |

**Düngemittel "Nitrathaitiger Kalkstickstoff" entsprechend A.1. Stickstoffdünger Nr. 3 (b) gemäß** Verordnung (EG) Nr. 2003/2003 des europäischen Parlaments und des Rates vom 13. Oktober 2003 über Düngemittel.

Zusammensetzung umfassend Calciumcyanamid (Zusammensetzung 2):

| | |
|---|---|
| - Calciumcyanamid: | 67,7 Gew.-% |
| - Calciumoxid: | 13,2 Gew.-% |
| - Calciumhydroxid: | 3,2 Gew.-% |
| - Freier Kohlenstoff: | 13,3 Gew.-% |
| - Wasser | 2,6 Gew.-% |

**Düngemittel "Kalkstickstoff" entsprechend A.1. Stickstoffdünger Nr. 3 (a) gemäß Verordnung** (EG) Nr. 2003/2003 des europäischen Parlaments und des Rates vom 13. Oktober 2003 über Düngemittel.

Zusammensetzung umfassend Calciumcyanamid (Zusammensetzung 4):

| | |
|---|---|
| - Calciumcyanamid: | 97,2 Gew.-% |
| - Calciumoxid: | 2,3 Gew.-% |
| - Calciumcarbonat: | 0,4 Gew.-% |
| - Wasser: | 0,1 Gew.-% |

Zusammensetzung umfassend Calciumhydroxid (Zusammensetzung 5):

| | |
|---|---|
| - Calciumhydroxid: | 99,8 Gew.-% |
| - Wasser: | 0,2 Gew.-% |

Zusammensetzung umfassend Calciumcarbonat (Zusammensetzung 6):

| | |
|---|---|
| - Calciumcarbonat: | 99,9 Gew.-% |
| - Wasser: | 0,1 Gew.-% |

### 5.2 Durchführung der Versuche:

### Zusammensetzung 1:

In einem 6 Liter Weithalsbehälter aus Polyethylen (PE) mit dicht schließendem Deckel wurden 3008 mL (entspricht 2976 g) Rindergülle der beschriebenen Zusammensetzung (vgl. 5.1) vorgelegt. Anschließend wurden 6,55 g der Zusammensetzung 1 zugegeben (entspricht 2,18 kg Zusammensetzung umfassend Calciumcyanamid oder 12,0 mol Calciumcyanamid pro m³ Rindergülle), und sorgfältig eingerührt. Nach dem Einrühren wurde der pH-Wert und die Leitfähigkeit in der Mischung gemessen, anschließend sofort der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. So wurde verhindert, dass CO₂ aus der Luft die Messergebnisse verfälscht. Die Mischung wurde für exakt 170 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Die gemessenen Werte nach dem Einrühren:

| | |
|---|---|
| pH-Wert: | 7,1 (22 °C) |
| Leitfähigkeit: | 20,4 mS/cm (22 °C) |

### Zusammensetzung 2:

In einem 6 Liter Weithalsbehälter aus Polyethylen (PE) mit dicht schließendem Deckel wurden 2995 mL (entspricht 2963 g) Rindergülle der beschriebenen Zusammensetzung (vgl. 5.1) vorgelegt. Anschließend wurden 4,15 g der Zusammensetzung 2 zugegeben (entspricht 1,39 kg Zusammensetzung umfassend Calciumcyanamid oder 11,7 mol Calciumcyanamid pro m³ Rindergülle), und sorgfältig eingerührt. Nach dem Einrühren wurde der pH-Wert und die Leitfähigkeit in der Mischung gemessen, anschließend sofort der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. So wurde verhindert, dass CO₂ aus der Luft die Messergebnisse verfälscht. Die Mischung wurde für exakt 170 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Die gemessenen Werte nach dem Einrühren:

| | |
|---|---|
| pH-Wert: | 7,3 (22 °C) |
| Leitfähigkeit: | 20,5 mS/cm (22 °C) |

### Zusammensetzung 4:

In einem 6 Liter Weithalsbehälter aus Polyethylen (PE) mit dicht schließendem Deckel wurden 3033 mL (entspricht 3001 g) Rindergülle der beschriebenen Zusammensetzung (vgl. 5.1) vorgelegt. Anschließend wurden 3,00 g der Zusammensetzung 4 zugegeben (entspricht 0,99 kg Zusammensetzung umfassend Calciumcyanamid oder 12,0 mol Calciumcyanamid pro m³ Rindergülle), und sorgfältig eingerührt. Nach dem Einrühren wurde der pH-Wert und die Leitfähigkeit in der Mischung gemessen, anschließend sofort der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. So wurde verhindert, dass CO₂ aus der Luft die Messergebnisse verfälscht. Die Mischung wurde für exakt 170 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Die gemessenen Werte nach dem Einrühren:

| | |
|---|---|
| pH-Wert: | 7,1 (22 °C) |
| Leitfähigkeit: | 20,2 mS/cm (22 °C) |

### Zusammensetzung 5:

In einem 6 Liter Weithalsbehälter aus Polyethylen (PE) mit dicht schließendem Deckel wurden 3044 mL (entspricht 3012 g) Rindergülle der beschriebenen Zusammensetzung (vgl. 5.1) vorgelegt. Anschließend wurden 1,51 g der Zusammensetzung 5 zugegeben (entspricht 0,50 kg Zusammensetzung umfassend Calciumhydroxid oder 6,7 mol Calciumhydroxid pro m³ Rindergülle), und sorgfältig eingerührt. Nach dem Einrühren wurde der pH-Wert und die Leitfähigkeit in der Mischung gemessen, anschließend sofort der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. So wurde verhindert, dass CO₂ aus der Luft die Messergebnisse verfälscht. Die Mischung wurde für exakt 170 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Die gemessenen Werte nach dem Einrühren:

| | |
|---|---|
| pH-Wert: | 7,3 (22 °C) |
| Leitfähigkeit: | 20,2 mS/cm (22 °C) |

### Zusammensetzung 6:

In einem 6 Liter Weithalsbehälter aus Polyethylen (PE) mit dicht schließendem Deckel wurden 2997 mL (entspricht 2965 g) Rindergülle der beschriebenen Zusammensetzung (vgl. 5.1) vorgelegt. Anschließend wurden 1,48 g der Zusammensetzung 6 zugegeben (entspricht 0,49 kg Zusammensetzung umfassend Calciumcarbonat oder 4,9 mol Calciumcarbonat pro m³ Rindergülle), und sorgfältig eingerührt. Nach dem Einrühren wurde der pH-Wert und die Leitfähigkeit in der Mischung gemessen, anschließend sofort der Weithalsbehälter dicht verschlossen. In dem Deckel des Weithalsbehälters war eine Öffnung gebohrt, in welcher abgedichtet ein Gasspeicherbeutel (Nennvolumen 5,6 Liter) angeschlossen war und in welchem das frei werdende Gasvolumen aufgefangen wurde. Mit diesem Aufbau konnte kein Luftsauerstoff in den Weithalsbehälter dringen. So wurde verhindert, dass CO₂ aus der Luft die Messergebnisse verfälscht. Die Mischung wurde für exakt 170 Tage ohne Rühren oder Bewegung bei einer Temperatur von 23 ± 1 °C und einem Luftdruck von 960 bis 980 hPa und 493 m über Normalhöhennull (NHN) gelagert. In regelmäßigen Abständen wurde der gefüllte Gasspeicherbeutel gewechselt, das gespeicherte Gasvolumen volumetrisch bestimmt sowie die Gaszusammensetzung per Gaschromatographie analysiert.

Die gemessenen Werte nach dem Einrühren:

| | |
|---|---|
| pH-Wert: | 7,1 (22 °C) |
| Leitfähigkeit: | 20,2 mS/cm (22 °C) |

### 5.3 Ergebnisse:

Die entstandenen Gasvolumina an Methan und Kohlenstoffdioxid sind in nachfolgenden Tabellen 5 bis 9 dargestellt (vgl. auch Figuren 5 bis 9 - graphische Darstellung Methan- und CO₂ - Emissionen aus Beispiel 5). Die Ergebnisse beziehen sich auf 1,000 kg Rindergülle je Versuchsvariante.

**Tabelle 5: entstandene Gasvolumina, bezogen auf 1,000 kg Rindergülle; Vergleich Referenz mit Zusammensetzung 1 enthaltend Calciumcyanamid.**

| **Versuchslaufzeit** | **Probe 1** (Referenz) | | **Probe 2** (Zusammensetzung 1) | |
|---|---|---|---|---|
| [Tage] | Methan [mL] | CO₂ [mL] | Methan [mL] | CO₂ [mL] |
| 6 | 88 [88] | 113 [113] | 7 [7] | 31 [31] |
| 32 | 13 [101] | 7 [120] | 1 [8] | 2 [33] |
| 57 | 122 [223] | 21 [141] | 2 [10] | 1 [34] |
| 71 | 471 [694] | 93 [234] | 1 [11] | 1 [35] |
| 79 | 456 [1150] | 92 [326] | 1 [12] | 1 [36] |
| 88 | 497 [1647] | 95 [421] | 1 [13] | 0 [36] |
| 97 | 665 [2312] | 94 [515] | 1 [14] | 2 [38] |
| 104 | 425 [2737] | 68 [583] | 0 [14] | 1 [39] |
| 111 | 402 [3139] | 66 [649] | 0 [14] | 0 [39] |
| 118 | 433 [3572] | 62 [711] | 1 [15] | 0 [39] |
| 127 | 319 [3891] | 82 [793] | 0 [15] | 1 [40] |
| 139 | 364 [4255] | 110 [903] | 0 [15] | 0 [40] |
| 153 | 449 [4704] | 99 [1002] | 0 [15] | 0 [40] |
| 170 | 229 [4933] | 65 [1067] | 1 [16] | 1 [41] |

Die Werte beziehen sich auf die Zeitperiode, die Werte in Klammern sind die kumulierten Werte über den gesamten Versuchszeitraum (vgl. Figur 5).

**Tabelle 6: entstandene Gasvolumina, bezogen auf 1,000 kg Rindergülle; Vergleich Referenz mit Zusammensetzung 2 enthaltend Calciumcyanamid.**

| **Versuchslaufzeit** | **Probe 1** (Referenz) | | **Probe 2** (Zusammensetzung 2) | |
|---|---|---|---|---|
| [Tage] | Methan [mL] | CO₂ [mL] | Methan [mL] | CO₂ [mL] |
| 6 | 88 [88] | 113 [113] | 4 [4] | 22 [22] |
| 32 | 13 [101] | 7 [120] | 2 [6] | 1 [23] |
| 57 | 122 [223] | 21 [141] | 1 [7] | 1 [24] |
| 71 | 471 [694] | 93 [234] | 1 [8] | 1 [25] |
| 79 | 456 [1150] | 92 [326] | 0 [8] | 1 [26] |
| 88 | 497 [1647] | 95 [421] | 1 [9] | 0 [26] |
| 97 | 665 [2312] | 94 [515] | 1 [10] | 1 [27] |
| 104 | 425 [2737] | 68 [583] | 0 [10] | 0 [27] |
| 111 | 402 [3139] | 66 [649] | 0 [10] | 0 [27] |
| 118 | 433 [3572] | 62 [711] | 0 [10] | 1 [28] |
| 127 | 319 [3891] | 82 [793] | 0 [10] | 0 [28] |
| 139 | 364 [4255] | 110 [903] | 0 [10] | 0 [28] |
| 153 | 449 [4704] | 99 [1002] | 0 [10] | 1 [29] |
| 170 | 229 [4933] | 65 [1067] | 1 [11] | 1 [30] |

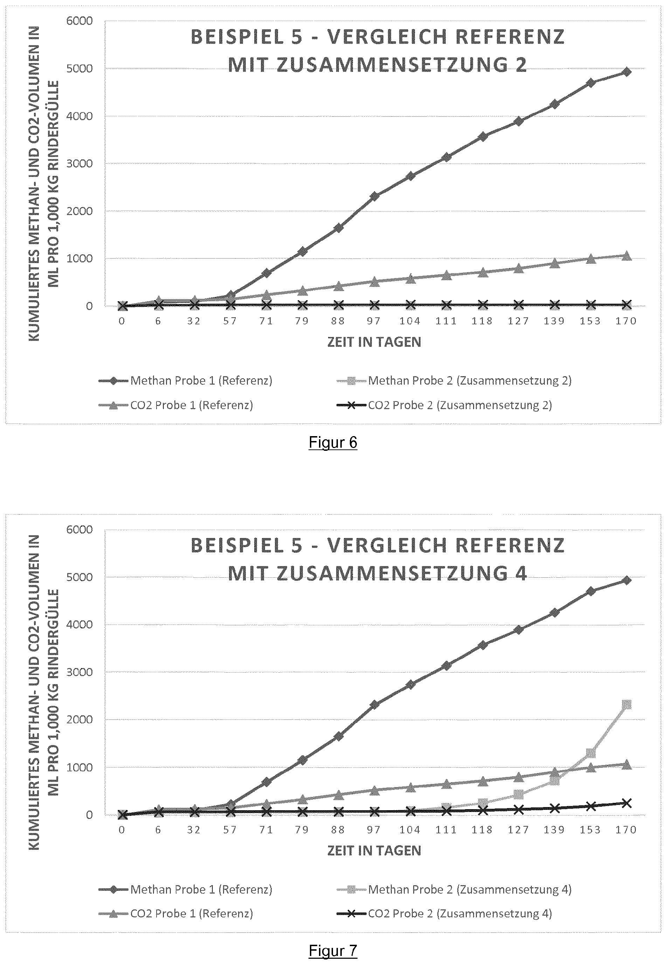

Die Werte beziehen sich auf die Zeitperiode, die Werte in Klammern sind die kumulierten Werte über den gesamten Versuchszeitraum (vgl. Figur 6).

**Tabelle 7: entstandene Gasvolumina, bezogen auf 1,000 kg Rindergülle; Vergleich Referenz mit Zusammensetzung 4 enthaltend Calciumcyanamid.**

| **Versuchslaufzeit** | **Probe 1** (Referenz) | | **Probe 2** (Zusammensetzung 4) | |
|---|---|---|---|---|
| [Tage] | Methan [mL] | CO₂ [mL] | Methan [mL] | CO₂ [mL] |
| 6 | 88 [88] | 113 [113] | 46 [46] | 60 [60] |
| 32 | 13 [101] | 7 [120] | 3 [49] | 3 [63] |
| 57 | 122 [223] | 21 [141] | 4 [53] | 2 [65] |
| 71 | 471 [694] | 93 [234] | 4 [57] | 2 [67] |
| 79 | 456 [1150] | 92 [326] | 2 [59] | 1 [68] |
| 88 | 497 [1647] | 95 [421] | 1 [60] | 0 [68] |
| 97 | 665 [2312] | 94 [515] | 7 [67] | 2 [70] |
| 104 | 425 [2737] | 68 [583] | 18 [85] | 3 [73] |
| 111 | 402 [3139] | 66 [649] | 68 [153] | 8 [81] |
| 118 | 433 [3572] | 62 [711] | 97 [250] | 13 [94] |
| 127 | 319 [3891] | 82 [793] | 177 [427] | 18 [112] |
| 139 | 364 [4255] | 110 [903] | 295 [722] | 24 [136] |
| 153 | 449 [4704] | 99 [1002] | 564 [1286] | 47 [183] |
| 170 | 229 [4933] | 65 [1067] | 1025 [2311] | 66 [249] |

Die Werte beziehen sich auf die Zeitperiode, die Werte in Klammern sind die kumulierten Werte über den gesamten Versuchszeitraum (vgl. Figur 7).

**Tabelle 8: entstandene Gasvolumina, bezogen auf 1,000 kg Rindergülle; Vergleich Referenz mit Zusammensetzung 5 enthaltend Calciumhydroxid.**

| **Versuchslaufzeit** | **Probe 1** (Referenz) | | **Probe 2** (Zusammensetzung 5) | |
|---|---|---|---|---|
| [Tage] | Methan [mL] | CO₂ [mL] | Methan [mL] | CO₂ [mL] |
| 6 | 88 [88] | 113 [113] | 125 [125] | 138 [138] |
| 32 | 13 [101] | 7 [120] | 39 [164] | 15 [153] |
| 57 | 122 [223] | 21 [141] | 124 [288] | 21 [174] |
| 71 | 471 [694] | 93 [234] | 709 [997] | 136 [310] |
| 79 | 456 [1150] | 92 [326] | 534 [1531] | 121 [431] |
| 88 | 497 [1647] | 95 [421] | 654 [2185] | 149 [580] |
| 97 | 665 [2312] | 94 [515] | 878 [3063] | 136 [716] |
| 104 | 425 [2737] | 68 [583] | 796 [3859] | 108 [824] |
| 111 | 402 [3139] | 66 [649] | 623 [4482] | 108 [932] |
| 118 | 433 [3572] | 62 [711] | 502 [4984] | 85 [1017] |
| 127 | 319 [3891] | 82 [793] | 411 [5395] | 89 [1106] |
| 139 | 364 [4255] | 110 [903] | 573 [5968] | 89 [1195] |
| 153 | 449 [4704] | 99 [1002] | 516 [6484] | 84 [1279] |
| 170 | 229 [4933] | 65 [1067] | 307 [6791] | 82 [1361] |

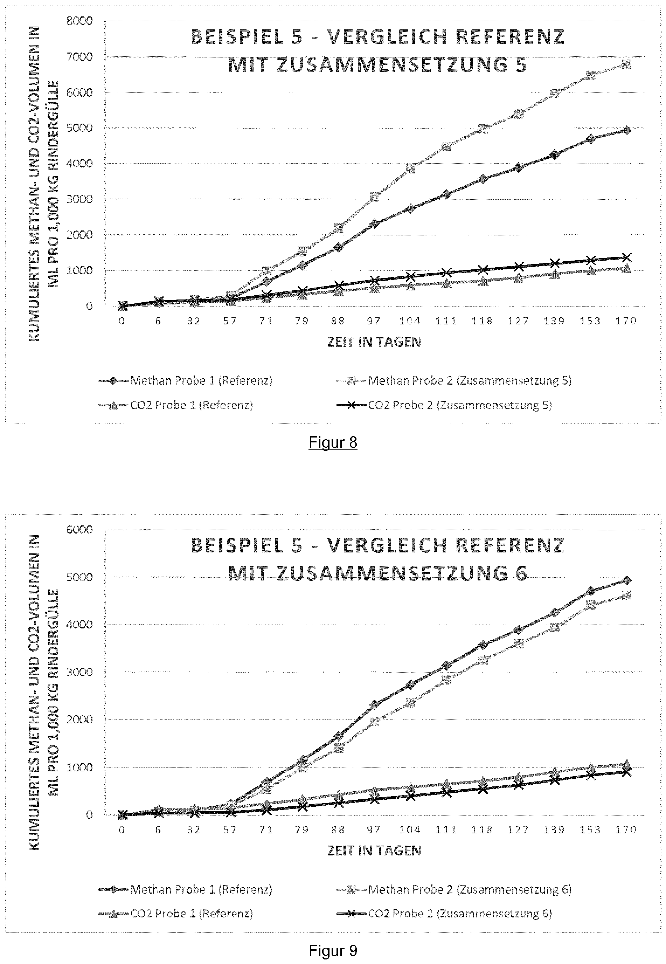

Die Werte beziehen sich auf die Zeitperiode, die Werte in Klammern sind die kumulierten Werte über den gesamten Versuchszeitraum (vgl. Figur 8).

**Tabelle 9: entstandene Gasvolumina, bezogen auf 1,000 kg Rindergülle; Vergleich Referenz mit Zusammensetzung 6 enthaltend Calciumcarbonat.**

| **Versuchslaufzeit** | **Probe 1** (Referenz) | | **Probe 2** (Zusammensetzung 6) | |
|---|---|---|---|---|
| [Tage] | Methan [mL] | CO₂ [mL] | Methan [mL] | CO₂ [mL] |
| 6 | 88 [88] | 113 [113] | 64 [64] | 35 [35] |
| 32 | 13 [101] | 7 [120] | 13 [77] | 4 [39] |
| 57 | 122 [223] | 21 [141] | 112 [189] | 12 [51] |
| 71 | 471 [694] | 93 [234] | 356 [545] | 46 [97] |
| 79 | 456 [1150] | 92 [326] | 447 [992] | 75 [172] |
| 88 | 497 [1647] | 95 [421] | 409 [1401] | 77 [249] |
| 97 | 665 [2312] | 94 [515] | 555 [1956] | 78 [327] |
| 104 | 425 [2737] | 68 [583] | 393 [2349] | 71 [398] |
| 111 | 402 [3139] | 66 [649] | 488 [2837] | 75 [473] |
| 118 | 433 [3572] | 62 [711] | 413 [3250] | 71 [544] |
| 127 | 319 [3891] | 82 [793] | 348 [3598] | 86 [630] |
| 139 | 364 [4255] | 110 [903] | 337 [3935] | 108 [738] |
| 153 | 449 [4704] | 99 [1002] | 477 [4412] | 97 [835] |
| 170 | 229 [4933] | 65 [1067] | 201 [4613] | 67 [902] |

Die Werte beziehen sich auf die Zeitperiode, die Werte in Klammern sind die kumulierten Werte über den gesamten Versuchszeitraum (vgl. Figur 9)

### 5.4 Zusammenfassung der Ergebnisse:

➢ Methanemissionen:
   Nach 170 Tagen Lagerung wurden im Referenzversuch (Probe 1) 4933 mL Methangas bezogen auf 1,000 kg Rindergülle freigesetzt.
   - Durch Zusatz von 6,55 g Calciumcyanamid in Form der Zusammensetzung 1 umfassend Calciumcyanamid, was 2,18 kg Zusammensetzung umfassend Calciumcyanamid oder einer Stoffmengenkonzentration von 12,0 mol Calciumcyanamid pro m³ Rindergülle entspricht, lassen sich diese Emissionen um 99,7 % auf 16 mL Methangas reduzieren.
   - Durch Zusatz von 4,15 g Calciumcyanamid in Form der Zusammensetzung 2 umfassend Calciumcyanamid, was 1,39 kg Zusammensetzung umfassend Calciumcyanamid oder einer Stoffmengenkonzentration von 11,7 mol Calciumcyanamid pro m³ Rindergülle entspricht, lassen sich diese Emissionen um 99,8 % auf 11 mL Methangas reduzieren.
   - Durch Zusatz von 3,00 g Calciumcyanamid in Form der Zusammensetzung 4 umfassend Calciumcyanamid, was 0,99 kg Zusammensetzung umfassend Calciumcyanamid oder einer Stoffmengenkonzentration von 12,0 mol Calciumcyanamid pro m³ Rindergülle entspricht, lassen sich diese Emissionen um 53,2 % auf 2311 mL Methangas reduzieren. Wobei nach 97 Tagen Lagerung erst 67 mL Methan freigesetzt wurden, was zu diesem Zeitpunkt einer Methangasreduzierung von 2245 mL oder 97,1 % entspricht. Der überwiegende Teil des Methangases setzte sich in der nachfolgenden Lagerzeit frei.
   - Durch Zusatz von 1,51 g Calciumhydroxid in Form der Zusammensetzung 5 umfassend Calciumhydroxid, was 0,50 kg Zusammensetzung umfassend Calciumhydroxid oder einer Stoffmengenkonzentration von 6,7 mol Calciumhydroxid pro m³ Rindergülle entspricht, erhöhen sich die Emissionen um 37,7 % auf 6791 mL Methangas.
   - Durch Zusatz von 1,48 g Calciumcarbonat in Form der Zusammensetzung 6 umfassend Calciumcarbonat, was 0,49 kg Zusammensetzung umfassend Calciumcarbonat oder einer Stoffmengenkonzentration von 4,9 mol Calciumcarbonat pro m³ Rindergülle entspricht, lassen sich diese Emissionen um 6,5 % auf 4613 mL Methangas reduzieren.
➢ CO₂-Emissionen:
   Hier ergibt sich ein ähnliches Bild. Nach 170 Tagen Lagerung wurden im Referenzversuch (Probe 1) 1067 mL CO₂-Gas bezogen auf 1,000 kg Rinderflüssigmist freigesetzt.
   - Durch Zusatz von 6,55 g Calciumcyanamid in Form der Zusammensetzung 1 umfassend Calciumcyanamid, was 2,18 kg Zusammensetzung umfassend Calciumcyanamid oder einer Stoffmengenkonzentration von 12,0 mol Calciumcyanamid pro m³ Rindergülle entspricht, lassen sich diese Emissionen um 96,2 % auf 41 mL CO₂-Gas reduzieren.
   - Durch Zusatz von 4,15 g Calciumcyanamid in Form der Zusammensetzung 2 umfassend Calciumcyanamid, was 1,39 kg Zusammensetzung umfassend Calciumcyanamid oder einer Stoffmengenkonzentration von 11,7 mol Calciumcyanamid pro m³ Rindergülle entspricht, lassen sich diese Emissionen um 97,2 % auf 30 mL CO₂-Gas reduzieren.
   - Durch Zusatz von 3,00 g Calciumcyanamid in Form der Zusammensetzung 4 umfassend Calciumcyanamid, was 0,99 kg Zusammensetzung umfassend Calciumcyanamid oder einer Stoffmengenkonzentration von 12,0 mol Calciumcyanamid pro m³ Rindergülle entspricht, lassen sich diese Emissionen um 76,7 % auf 249 mL CO₂-Gas reduzieren.
   - Durch Zusatz von 1,51 g Calciumhydroxid in Form der Zusammensetzung 5 umfassend Calciumhydroxid, was 0,50 kg Zusammensetzung umfassend Calciumhydroxid oder einer Stoffmengenkonzentration von 6,7 mol Calciumhydroxid pro m³ Rindergülle entspricht, erhöhen sich die Emissionen um 27,6 % auf 1361 mL CO₂-Gas.
   - Durch Zusatz von 1,48 g Calciumcarbonat in Form der Zusammensetzung 6 umfassend Calciumcarbonat, was 0,49 kg Zusammensetzung umfassend Calciumcarbonat oder einer Stoffmengenkonzentration von 4,9 mol Calciumcarbonat pro m³ Rindergülle entspricht, lassen sich diese Emissionen um 15,5 % auf 902 mL CO₂-Gas reduzieren.

### Zusammenfassung der Ergebnisse aus Beispiel 1 bis 5

Die absolute Menge an freisetzbaren Gasen wie Methan und Kohlenstoffdioxid aus Wirtschaftsdüngern ist von mehreren Faktoren abhängig:
- Art und Ursprung des Wirtschaftsdüngers
- Verweildauer, Temperatur und Sauerstoffzufuhr in Form von Frischluft zum Wirtschaftsdünger im Sammelkanal bis zur Entnahme
- Nährstoffgehalt in den tierischen Ausscheidungen als Folge von Futterzusammensetzung für die Nutztiere

Ersichtlich ist das in den Beispielen 1 bis 5. Obwohl in diesen Beispielen überall frisch entnommener Wirtschaftsdünger derselben Art und aus demselben Ursprung zum Einsatz kam, waren die freigesetzten Mengen an Methan und Kohlenstoffdioxid zwischen den Referenzen unterschiedlich hoch.

Durch Zugabe von 2,93 kg Calciumcyanamid in Form der Zusammensetzung 1 pro m³ Rindergülle und anschließendem Inkontaktbringen in Beispiel 1 wird nach 156tägiger Lagerung die Methanfreisetzung um 99,7 % und die CO₂-Freisetzung um 97,9 % gegenüber dem Referenzversuch reduziert. Ein sehr ähnliches Ergebnis ergibt sich bei analoger Vorgehensweise und Lagerdauer bei der Zugabe von 1,38 kg Calciumcyanamid in Form der Zusammensetzung 2 pro m³ Rindergülle in Beispiel 2. Die Methanfreisetzung wird um 99,4 % und die CO₂-Freisetzung um 97,1 % reduziert.

Bestätigt werden diese Ergebnisse in Beispiel 5 sogar mit längerer Lagerzeit. Durch Zugabe von 2,18 kg Calciumcyanamid in Form der Zusammensetzung 1 pro m³ Rindergülle und anschließendem Inkontaktbringen wird nach 170tägiger Lagerung die Methanfreisetzung um 99,7 % und die CO₂-Freisetzung um 96,2 % gegenüber dem Referenzversuch reduziert. Durch Zugabe von 1,39 kg Calciumcyanamid in Form der Zusammensetzung 2 pro m³ Rindergülle und anschließendem Inkontaktbringen wird nach 170tägiger Lagerung die Methanfreisetzung um 99,8 % und die CO₂-Freisetzung um 97,2 % reduziert.

Hingegen wird bei der Zugabe von 0,983 kg Hydrogencyanamid-Lösung in Form der Zusammensetzung 3 pro m³ Rindergülle, was einer sehr ähnlichen Stoffmengenkonzentration im Vergleich zu den Beispielen 2, 4 und 5 entspricht, nach 150tägiger Lagerung die Methanfreisetzung nur um 82,9 % und die CO₂-Freisetzung nur um 78,2 % gegenüber dem Referenzversuch reduziert.

Weiterhin wird gezeigt, dass durch Zugabe und Inkontaktbringen von 2,16 kg Calciumcyanamid in Form der Zusammensetzung 1 pro m³ Rindergülle zu einem Zeitpunkt, als die Rindergülle massiv Methan und CO₂ freisetzt, diese Freisetzung nahezu gestoppt wird. So werden ab dem Zeitpunkt der Zugabe und einem Zeitraum von 46 Tagen danach nur noch 2 mL Methan und 3 mL CO₂ pro 1,000 kg Rindergülle freigesetzt, im Referenzversuch sind dies 1872 mL Methan und 372 ml CO₂ pro 1,000 kg Rindergülle.

Jedoch zeigt die Zugabe von 0,99 kg Calciumcyanamid in Form der Zusammensetzung 4, welche einen geringen Anteil an Calciumoxid (2,3 Gew.-%) und Calciumcarbonat (0,4 Gew.-%) aufweist, pro m³ Rindergülle und anschließendem Inkontaktbringen einen deutlich kürzeren Zeitraum einer reduzierten Methan- und CO₂-Freisetzung, obwohl die zugegebene Stoffmengenkonzentration an Calciumcyanamid gleich zu den Zusammensetzungen 1 und 2 im Beispiel 5 war.

Ebenso wird im Beispiel 5 gezeigt, dass eine Zugabe mit anschließendem Inkontaktbringen von 0,50 kg Calciumhydroxid in Form der Zusammensetzung 5 pro m³ Rindergülle die Freisetzung von Methan und CO₂ nach 170tägiger Lagerung gegenüber dem Referenzversuch sogar erhöht. Die Zugabe von 0,49 kg Calciumcarbonat in Form der Zusammensetzung 6 pro m³ Rindergülle unter analoger Durchführung reduziert die Freisetzung von Methan und CO₂ hingegen nur im geringem Maße. Umso überraschender ist die mit 156 Tagen bzw. 170 Tagen anhaltende effektive Reduzierung der Methan- und CO₂-Freisetzung durch die Zugabe der Zusammensetzungen 1 oder 2, welche eine Kombination aus Calciumcyanamid und Calciumoxid/Calciumhvdroxid und/oder Calciumcarbonat aufweist. Die freigesetzten Gasmengen der Referenzversuche aus den Beispielen 1 bis 5 zeigen, dass nach 150 bis 170tägiger Lagerung von Rindergülle 4,2 bis 5,9-mal mehr Volumen an Methan als an CO₂ freigesetzt wird. Unter Berücksichtigung des Molaren Volumens (Vₘ) wird 1,5 bis 2,1-mal mehr Masse an Methan als an CO₂ freigesetzt. Methan besitzt ein Treibhausgaspotential (Global warming potential, GWP) von 28 gemäß IPCC AR5 bezogen auf 100 Jahre. Das bedeutet, dass ein Kilogramm Methan innerhalb der ersten 100 Jahre nach der Freisetzung 28-mal so stark zum Treibhauseffekt beiträgt wie ein Kilogramm CO₂ (Quelle: Wikipedia). Somit wird gemäß der vorliegenden Erfindung ein deutlicher Beitrag zur Reduzierung der Treibhausgasemissionen geleistet, ohne den Stickstoffgehalt im Wirtschaftsdünger signifikant zu erhöhen.

## Patentansprüche

1. Verfahren zur Reduzierung der Emission von Methan und/oder Kohlenstoffdioxid aus Wirtschaftsdünger während dessen Lagerung umfassend die Verfahrensschritte
a) Bereitstellen eines Lagertanks für den Wirtschaftsdünger mit einem Volumen X, und
b) Befüllen des Lagertanks mit dem Wirtschaftsdünger in einer Menge, die mindestens 5 Vol.-% des Volumens X des Lagertanks entspricht, und
c) Zugeben einer Zusammensetzung umfassend Calciumcyanamid in den Lagertank und Inkontaktbringen der Zusammensetzung mit dem Wirtschaftsdünger.

2. Verfahren nach Anspruch 1, **dadurch gekennzeichnet, dass** die Zugabe der Zusammensetzung vor, während oder nach der ersten Befüllung mit Wirtschaftsdünger erfolgt.

3. Verfahren nach Anspruch 1 oder 2, **dadurch gekennzeichnet**, die Zugabe der Zusammensetzung
i) einmalig nach oder während der ersten Zugabe einer ersten Teilmenge an Wirtschaftsdünger in den Lagertank erfolgt, oder
ii) portionsweise nach jeder Teilbefüllung des Lagertanks erfolgt, oder
iii) einmalig nach oder während der vollständigen Befüllung des Lagertanks mit Wirtschaftsdünger erfolgt.

4. Verfahren nach einem der zuvor genannten Ansprüche, **dadurch gekennzeichnet, dass** der Lagertank für den Wirtschaftsdünger ein offener Lagertank oder ein geschlossener Lagertank ist.

5. Verfahren nach einem der zuvor genannten Ansprüche, **dadurch gekennzeichnet, dass** die Lagertemperatur des Wirtschaftsdüngers von 0 bis 60 °C beträgt.

6. Verfahren nach einem der zuvor genannten Ansprüche, **dadurch gekennzeichnet, dass** die Zusammensetzung 10 bis 100 Gew.-% Calciumcyanamid umfasst.

7. Verfahren nach einem der zuvor genannten Ansprüche, **dadurch gekennzeichnet, dass** die Zusammensetzung als Feststoff oder als Suspension dem Wirtschaftsdünger zugegeben wird.

8. Verfahren nach Anspruch 1 oder 2, **dadurch gekennzeichnet, dass** die Zusammensetzung in einer Menge von 0,5 bis 10 kg pro 1 m³ Wirtschaftsdünger dem Wirtschaftsdünger zugegeben wird.

9. Verwendung einer Zusammensetzung umfassend Calciumcyanamid zur Reduzierung der Emission von Methan und/oder Kohlenstoffdioxid aus Wirtschaftsdünger während dessen Lagerung in einem Lagertank.

10. Verwendung einer Zusammensetzung umfassend Calciumcyanamid als Gärstopper oder Gärinhibitor einer anaeroben Gärung von Wirtschaftsdünger und/ oder als Inhibitor eines mikrobiellen Abbaus von organischen Substraten in Wirtschaftsdünger während dessen Lagerung in einem Lagertank.

11. Verwendung nach Anspruch 9 oder 10, **dadurch gekennzeichnet, dass** die Zusammensetzung 10 bis 100 Gew.-% Calciumcyanamid umfasst.

12. Verwendung nach Anspruch 9 oder 10, **dadurch gekennzeichnet, dass** die Zusammensetzung umfasst,
| | | |
|---|---|---|
| a) | 25 bis 95 Gew.-% | Calciumcyanamid, |
| b) | 5 bis 40 Gew.-% | mindestens eine Verbindung aus der Gruppe Mag nesi um carbonat, Mag nes i u m hydrogencarbonat, Magnesiumoxid, Magnesiumhydroxid, Calciumcarbonat, Calciumhydrogencarbonat, Calciumoxid und Calciumhydroxid, oder Mischungen hiervon, |
| c) | bis zu 20 Gew.-% | mindestens ein Nitrat aus der Gruppe Natriumnitrat, Kaliumnitrat, Magnesiumnitrat und Calciumnitrat, oder Mischungen hiervon, |
| d) | bis zu 15 Gew.-% | freier Kohlenstoff, Kohle oder Graphit, und |
| e) | bis zu 10 Gew.-% | Wasser. |

13. Verwendung nach Anspruch 9 oder 10, **dadurch gekennzeichnet, dass** die Zusammensetzung umfasst,
| | | |
|---|---|---|
| a) | 50 bis 80 Gew.-% | Calciumcyanamid, |
| b) | 5 bis 25 Gew.-% | mindestens eine Verbindung aus der Gruppe Mag nesi um carbonat, Mag nes i u m hydrogencarbonat, Magnesiumoxid, Magnesiumhydroxid, Calciumcarbonat, Calciumhydrogencarbonat, Calciumoxid und Calciumhydroxid, oder Mischungen hiervon, |
| c) | 1 bis 15 Gew.-% | freier Kohlenstoff, Kohle oder Graphit, und |
| d) | bis zu 10 Gew.-% | Wasser. |

14. Verwendung nach Anspruch 9 oder 10, **dadurch gekennzeichnet, dass** die Zusammensetzung umfasst,
| | | |
|---|---|---|
| a) | 35 bis 55 Gew.-% | Calciumcyanamid, |
| b) | 15 bis 35 Gew.-% | mindestens eine Verbindung aus der Gruppe Mag nesi um carbonat, Mag nes i u m hydrogencarbonat, Magnesiumoxid, Magnesiumhydroxid, Calciumcarbonat, Calciumhydrogencarbonat, Calciumoxid und Calciumhydroxid, oder Mischungen hiervon, |
| c) | 1 bis 20 Gew.-% | mindestens ein Nitrat aus der Gruppe Natriumnitrat, Kaliumnitrat, Magnesiumnitrat und Calciumnitrat, oder Mischungen hiervon, |
| d) | 1 bis 15 Gew.-% | freier Kohlenstoff, Kohle oder Graphit, und |
| e) | bis zu 10 Gew.-% | Wasser. |

15. Verwendung nach einem der zuvor genannten Ansprüche 9 bis 14, **dadurch gekennzeichnet, dass** die Zusammensetzung in Form eines Feststoffes oder einer Suspension verwendet wird; und/oder
dass die Zusammensetzung in einer Menge von 0,5 bis 10 kg pro 1 m³ Wirtschaftsdünger eingesetzt wird.

## Claims

1. A process for reducing the emission of methane and/or carbon dioxide from farm manure during its storage, comprising the process steps of
a) providing a storage tank for the farm manure with a volume X, and
b) filling the storage tank with the farm manure in an amount equal to at least 5 vol. % of the volume X of the storage tank; and
c) adding a composition comprising calcium cyanamide to the storage tank and bringing the composition into contact with the farm manure.

2. A process according to claim 1, **characterized in that** the addition of the composition takes place before, during or after the first filling with farm manure.

3. A process according to claim 1 or 2, **characterized in that** the addition of the composition
i) takes place once after or during the first addition of a first partial amount of farm manure to the storage tank, or
ii) takes place in portions after each partial filling of the storage tank, or
iii) takes place once after or during the complete filling of the storage tank with farm manure.

4. A process according to any one of the preceding claims, **characterized in that** the storage tank for the farm manure is an open storage tank or a closed storage tank.

5. A process according to any one of the preceding claims, **characterized in that** the storage temperature of the farm manure is from 0 to 60 °C.

6. A process according to any one of the preceding claims, **characterized in that** the composition comprises from 10 to 100 wt. % of calcium cyanamide.

7. A process according to any one of the preceding claims, **characterized in that** the composition is added to the farm manure as a solid or as a suspension.

8. A process according to claim 1 or 2, **characterized in that** the composition is added to the farm manure in an amount of 0.5 to 10 kg per 1 m³of farm manure.

9. Use of a composition comprising calcium cyanamide for reducing the emission of methane and/or carbon dioxide from farm manure during its storage in a storage tank.

10. Use of a composition comprising calcium cyanamide as a fermentation stopper or inhibitor of anaerobic fermentation of farm manure and/or as an inhibitor of microbial degradation of organic substrates in farm manure during its storage in a storage tank.

11. Use according to claim 9 or 10, **characterized in that** the composition comprises 10 to 100 wt. % of calcium cyanamide.

12. Use according to claim 9 or 10, **characterized in that** the composition comprises,
| | | |
|---|---|---|
| a) | 25 to 95 wt. % | calcium cyanamide, |
| b) | 5 to 40 wt. % | of at least one compound selected from the group consisting of magnesium carbonate, magnesium hydrogen carbonate, magnesium oxide, magnesium hydroxide, calcium carbonate, calcium hydrogen carbonate, calcium oxide and calcium hydroxide, or mixtures thereof, |
| c) | up to 20 wt. % | of at least one nitrate selected from the group consisting of sodium nitrate, potassium nitrate, magnesium nitrate and calcium nitrate, or mixtures thereof, |
| d) | up to 15 wt. % | free carbon, charcoal or graphite, and |
| e) | up to 10 wt.% | water. |

13. Use according to claim 9 or 10, **characterized in that** the composition comprises,
| | | |
|---|---|---|
| a) | 50 to 80 wt.% | calcium cyanamide, |
| b) | 5 to 25 wt. % | of at least one compound selected from the group consisting of magnesium carbonate, magnesium hydrogen carbonate, magnesium oxide, magnesium hydroxide, calcium carbonate, calcium hydrogen carbonate, calcium oxide and calcium hydroxide, or mixtures thereof, |
| c) | 1 to 15 wt. % | free carbon, charcoal or graphite, and |
| d) | up to 10 wt. % | water. |

14. Use according to claim 9 or 10, **characterized in that** the composition comprises,
| | | |
|---|---|---|
| a) | 35 to 55 wt.% | calcium cyanamide, |
| b) | 15 to 35 wt. % | of at least one compound selected from the group consisting of magnesium carbonate, magnesium hydrogen carbonate, magnesium oxide, magnesium hydroxide, calcium carbonate, calcium hydrogen carbonate, calcium oxide and calcium hydroxide, or mixtures thereof, |
| c) | 1 to 20 wt. % | of at least one nitrate selected from the group consisting of sodium nitrate, potassium nitrate, magnesium nitrate and calcium nitrate, or mixtures thereof, |
| d) | 1 to 15 wt. % | free carbon, charcoal or graphite, and |
| e) | up to 10 wt. % | water. |

15. Use according to any of the preceding claims 9 to 14, **characterized in that** the composition is used in the form of a solid or a suspension; and/or
**in that** the composition is used in an amount of 0.5 to 10 kg per 1 m³ of farm manure.

## Revendications

1. Procédé pour réduire les émissions de méthane et/ou de dioxyde de carbone provenant d'engrais de ferme pendant leur stockage, comprenant les étapes de procédé suivantes
a) mise à disposition d'un réservoir de stockage pour l'engrais de ferme d'un volume X, et
b) remplissage du réservoir de stockage avec l'engrais de ferme en une quantité correspondant à au moins 5 % en volume du volume X du réservoir de stockage, et
c) ajouter une composition comprenant du cyanamide calcique dans le réservoir de stockage et mettre en contact la composition avec l'engrais de ferme.

2. Procédé selon la revendication 1,
**caractérisé en ce que** l'ajout de la composition a lieu avant, pendant ou après le premier remplissage avec de l'engrais de ferme.

3. Procédé selon la revendication 1 ou 2,
**caractérisé en ce que** l'addition de la composition est effectuée
i) en une seule fois après ou pendant la première addition d'une première quantité partielle d'engrais de ferme dans le réservoir de stockage, ou
ii) par portions après chaque remplissage partiel du réservoir de stockage, ou
iii) une seule fois après ou pendant le remplissage complet du réservoir de stockage avec de l'engrais de ferme.

4. Procédé selon l'une des revendications précédentes,
**caractérisé en ce que** le réservoir de stockage pour l'engrais de ferme est un réservoir de stockage ouvert ou un réservoir de stockage fermé.

5. Procédé selon l'une des revendications précédentes,
**caractérisé en ce que** la température de stockage de l'engrais de ferme est comprise entre 0 et 60 °C.

6. Procédé selon l'une des revendications précédentes,
**caractérisé en ce que** la composition comprend de 10 à 100 % en poids de cyanamide calcique.

7. Procédé selon l'une des revendications précédentes,
**caractérisé en ce que** la composition est ajoutée à l'engrais de ferme sous forme de solide ou de suspension.

8. Procédé selon la revendication 1 ou 2,
**caractérisé en ce que** la composition est ajoutée à l'engrais de ferme en une quantité de 0,5 à 10 kg pour 1 m³ d'engrais de ferme.

9. Utilisation d'une composition comprenant de la cyanamide calcique pour réduire les émissions de méthane et/ou de dioxyde de carbone provenant d'un engrais de ferme pendant son stockage dans un réservoir de stockage.

10. Utilisation d'une composition comprenant de la cyanamide calcique en tant qu'arrêt ou inhibiteur de fermentation d'une fermentation anaérobie d'engrais de ferme et/ou en tant qu'inhibiteur d'une dégradation microbienne de substrats organiques dans des engrais de ferme pendant leur stockage dans un réservoir de stockage.

11. Utilisation selon la revendication 9 ou 10,
**caractérisée en ce que** la composition comprend de 10 à 100 % en poids de cyanamide calcique.

12. Utilisation selon la revendication 9 ou 10,
**caractérisée en ce que** la composition comprend
a) 25 à 95 % en poids de cyanamide calcique,
b) 5 à 40 % en poids d'au moins un composé choisi dans le groupe comprenant le carbonate de magnésium, l'hydrogénocarbonate de magnésium, l'oxyde de magnésium, l'hydroxyde de magnésium, le carbonate de calcium, l'hydrogénocarbonate de calcium, l'oxyde de calcium et l'hydroxyde de calcium, ou des mélanges de ceux-ci,
c) jusqu'à 20 % en poids d'au moins un nitrate choisi dans le groupe comprenant le nitrate de sodium, le nitrate de potassium, le nitrate de magnésium et le nitrate de calcium, ou des mélanges de ceux-ci,
d) jusqu'à 15 % en poids de carbone, de charbon ou de graphite libre ; et
e) jusqu'à 10 % en poids d'eau.

13. Utilisation selon la revendication 9 ou 10,
**caractérisée en ce que** la composition comprend
a) 50 à 80 % en poids de cyanamide calcique,
b) 5 à 25 % en poids d'au moins un composé choisi dans le groupe comprenant le carbonate de magnésium, l'hydrogénocarbonate de magnésium, l'oxyde de magnésium, l'hydroxyde de magnésium, le carbonate de calcium, l'hydrogénocarbonate de calcium, l'oxyde de calcium et l'hydroxyde de calcium, ou des mélanges de ceux-ci,
c) 1 à 15 % en poids de carbone, de charbon ou de graphite libre ; et
d) jusqu'à 10 % en poids d'eau.

14. Utilisation selon la revendication 9 ou 10,
**caractérisée en ce que** la composition comprend
a) 35 à 55 % en poids de cyanamide calcique,
b) 15 à 35 % en poids d'au moins un composé choisi dans le groupe comprenant le carbonate de magnésium, l'hydrogénocarbonate de magnésium, l'oxyde de magnésium, l'hydroxyde de magnésium, le carbonate de calcium, l'hydrogénocarbonate de calcium, l'oxyde de calcium et l'hydroxyde de calcium, ou des mélanges de ceux-ci,
c) 1 à 20 % en poids d'au moins un nitrate choisi dans le groupe comprenant le nitrate de sodium, le nitrate de potassium, le nitrate de magnésium et le nitrate de calcium, ou leurs mélanges,
d) 1 à 15 % en poids de carbone libre, de charbon ou de graphite, et
e) jusqu'à 10 % en poids d'eau.

15. Utilisation selon l'une des revendications 9 à 14 précédentes,
**caractérisée en ce que** la composition est utilisée sous la forme d'un solide ou d'une suspension ; et/ou **en ce que** la composition est utilisée en une quantité de 0,5 à 10 kg pour 1 m³ d'engrais de ferme.
